Europäisches Patentamt

(19) European Patent Office

Office européen des brevets

(11) Publication number : **0 330 116 B1**

(12) **EUROPEAN PATENT SPECIFICATION**

(45) Date of publication of patent specification :
13.12.95 Bulletin 95/50

(51) Int. Cl.⁶ : **H01F 10/18, G11B 5/64**

(21) Application number : **89102895.3**

(22) Date of filing : **20.02.89**

(54) **Magnetic recording medium**

(30) Priority : **22.02.88 JP 39264/88**
**09.09.88 JP 226264/88**
**09.09.88 JP 226265/88**
**09.09.88 JP 226266/88**

(43) Date of publication of application :
**30.08.89 Bulletin 89/35**

(45) Publication of the grant of the patent :
**13.12.95 Bulletin 95/50**

(84) Designated Contracting States :
**DE FR GB NL**

(56) References cited :
**EP-A- 0 167 118**
**DE-A- 3 203 918**
**DE-A- 3 216 863**
**FR-A- 2 583 211**
**US-A- 4 652 499**
**PATENT ABSTRACTS OF JAPAN, vol. 9, no. 102 (E-312)[1825], 4th May 1985; & JP-A-59 227 107 (HITACHI KINZOKU K.K.) 20-12-1984**
**PATENT ABSTRACTS OF JAPAN, vol. 11, no. 22 (P-538)[2469], 21st January 1987; & JP-A-61 194 625 (MATSUSHITA ELECTRIC IND. CO., LTD) 29- 08-1986**
**PATENT ABSTRACTS OF JAPAN, vol. 13, no. 85 (P-834)[3433], 27th February 1989; & JP-A-63 266 626 (TOSHIBA CORP.) 02-11-1988**

(56) References cited :
**PATENT ABSTRACTS OF JAPAN, vol. 13, no. 363 (P-918)[3711], 14th August 1989; & JP-A-1 122 020 (DENKI KAGAKU KOGYO K.K.) 15-05-1989**
**PATENT ABSTRACTS OF JAPAN, vol. 8, no. 245 (P-312)[1682], 10th November 1984; & JP-A-59 116 924 (NIPPON DENKI K.K.) 06-07-1984**

(73) Proprietor : **SONY CORPORATION**
**7-35 Kitashinagawa 6-chome**
**Shinagawa-ku**
**Tokyo 141 (JP)**

(72) Inventor : **Hayashi, Kazuhiko**
**c/o Sony Corporation**
**7-35, Kitashinagawa 6-chome**
**Shinagawa-ku Tokyo (JP)**
Inventor : **Okabe, Akihiko**
**c/o Sony Corporation**
**7-35, Kitashinagawa 6-chome**
**Shinagawa-ku Tokyo (JP)**
Inventor : **Hayakawa, Masatoshi**
**c/o Sony Corporation**
**7-35, Kitashinagawa 6-chome**
**Shinagawa-ku Tokyo (JP)**
Inventor : **Aso, Koichi**
**c/o Sony Corporation**
**7-35, Kitashinagawa 6-chome**
**Shinagawa-ku Tokyo (JP)**

(74) Representative : **TER MEER - MÜLLER - STEINMEISTER & PARTNER**
**Mauerkircherstrasse 45**
**D-81679 München (DE)**

## Description

## Field of the Invention

The present invention relates generally to magnetic thin films and, more particularly, is directed to a magnetic thin film for use as a perpendicular magnetic recording medium.

## Description of the Prior Art

As a magnetic thin film, or a magnetic thin film formed by the isotropy, i.e., surface magnetization used as a prior art magnetic thin film recording medium, there are known magnetic thin films utilizing alloys such as CoNi, CoP, CoPt and the like. These magnetic thin films made of these CoNi and CoP alloys have a hard magnetic characteristic utilizing a columnar structure. The films have a saturation magnetic flux density Bs of about 10 kG (10 kG = 1 T) and a magnetic coercive force Hc equal to or less than about 1 k0e (10e = 79.57 A/m). The CoPt magnetic thin film is disclosed, for example, in Official Gazette of Japanese Laid-Open Patent Application No. 58-200513. When this CoPt magnetic thin film has a thickness less than 300 Å (1 Å = $10^{-10}$m), the film has a high coercive force Hc of more than 1.5 k0e. However, with an increase of its film thickness, it demonstrates saturation magnetic flux density Bs of about 10kG, while it demonstrates the magnetic coercive force Hc of 700 Oe at most.

On the other hand, the magnetic thin film, which is made according to the perpendicular magnetization, use known magnetic thin films of alloys, such as CoCr, CoMo, CoV, CoRu and so on. In this case, examining the typical magnetic characteristic with respect to the CoCr-system magnetic thin film which is most excellent in magnetic characteristic, the film has a saturation magnetic flux density Bs that falls in a range of 4 kG to 6 kG and its perpendicular magnetic coercive force $Hc^{\perp}$ demonstrates a value of nearly about 1.5 k0e when a substrate temperature in the film growing-process such as a sputtering-process of this alloy film is about 150°C. If the substrate temperature during the film growing-process is about the room temperature, the perpendicular coercive force $Hc^{\perp}$ becomes about 300 Oe. Then, a rectangular ratio $(Mr/Ms)^{\perp}$ in the perpendicular direction is about 0.2 and an anisotropic magnetic field Hk is about 4 to 6 k0e. In this case, because the saturation magnetic flux density Bs is relatively low and the perpendicular coercive force $Hc^{\perp}$ cannot be increased without increasing the substrate temperature during the film growing-process, it is impossible to use a relatively inexpensive polyethylene terephthalate (PET) substrate of low heat-resisting property as the substrate for the film.

DE-A-3 203 918, US-A-4 652 499, JP-A-59 227 107 and FR-A-2 583 211 disclose magnetic film compositions which, however, do not contain oxygen. DE-A-3 216 863 discloses a magnetic thin film containing Co as main component and additionally 0.1 to 5.0 atomic% of at least one of Mo, Ta and W. As may be concluded from the experimental data in this document, it has been the object to provide a magnetic thin film having a high coercive force and a good wear resistance. Also, it is rather generally stated that the metal film may additionally contain various elements. such as, among others, Cr, Ti, Pt as well as low amounts of non-metals, such as B, N, O, P and C. However, there is no explanation or illustration of the effects of said additional elements or non-metals. JP-A-61 194 625 relates to a magnetic recording medium comprising a magnetic film of Co-Pt-O which is, however, free of boron.

## SUMMARY OF THE INVENTION

It is an object of the present invention to provide an improved magnetic thin film which can remove the above-mentioned defects.

It is another object of the present invention to provide an improved magnetic recording medium.

It is still another object of the present invention to provide a magnetic thin film which, without increasing a substrate temperature in this film growing-process and even in the film thickness near or less than 5000 Å, can demonstrate a high magnetic coercive force, a high saturation magnetic flux density and high perpendicular anisotropic magnetic field.

It is a further object of the present invention to provide a magnetic thin film which is suitable for being applied to a perpendicular magnetic recording medium.

It is yet a further object of the present invention to provide a magnetic thin film which can use an inexpensive substrate, such as a polyethylene terephthalate substrate and the like.

According to an aspect of the present invention, there is provided a magnetic thin film having a composition represented by the following formula:

$$(Co_aPt_bB_c)_{100-x} O_x$$

2

wherein a, b, c, and x represent atomic percents of respective elements and satisfy relationships expressed as

$0 < a$

$0 < b \leqq 50$

$0 < c \leqq 30$

$a + b + c = 100$

$0 < x \leqq 15$

According to another aspect of the present invention, there is provided a magnetic recording medium comprising a magnetic thin film which has a composition represented by the following formula

$$(Co_a Pt_b B_c M_d)_{100-x} O_x$$

wherein a, b, c, d and x represent atomic percents of respective elements and satisfy relationships expressed as

$0 < a$

$0 < b \leqq 50$

$0 < c \leqq 30$

$0 < d \leqq 30$

$a + b + c + d = 100$

$0 \leqq x \leqq 15$

and M represents at least one of the following constituents selected from the group consisting of Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd and Re.

According to a further aspect of the present invention, there is provided a magnetic thin film having a composition represented by the following formula:

$$(Co_a Pt_b M'_e)_{100-x} O_x$$

wherein a, b, e and x represent atomic percents of respective elements and satisfy relationships expressed as

$0 < a$

$0 < b \leqq 50$

$0 < e \leqq 30$

$a + b + e = 100$

$0 < x \leqq 15$

and M' represents at least one of the following constituents selected from the group consisting of Ti, Zr, V, Cr, Nb, Mo, Ta and W.

The above, and other objects, features and advantages of the present invention will become apparent from the following detailed description of the preferred embodiments to be taken in conjunction with the accompanying drawings, in which like reference numerals designate like elements and parts.

BRIEF DESCRIPTION OF THE DRAWINGS

Figs. 1A to 1C are tables showing measured results of magnetic characteristics of magnetic thin films of the present invention having different alloy compositions;

Figs. 2A and 2B are graphical representations used to explain the measured results in the tables of Figs. 1A to 1C, respectively;

Fig. 3 is a graph of a magnetization M - magnetic field H characteristic curve of an embodiment of a magnetic thin film according to the present invention;

Figs. 4A to 4F are tables showing measured results of magnetic characteristics of magnetic thin films of the present invention having different alloy compositions;

Fig. 5 is a graph of magnetization M - magnetic field H characteristic curve of other embodiment of a magnetic thin film according to the present invention;

Fig. 6 is a representation showing measured results of saturation magnetic flux density of a reference magnetic thin film relative to respective components thereof;

Fig. 7 is a representation showing measured results of residual magnetic flux density ratio of a reference magnetic thin film relative to respective components thereof;

Fig. 8 is a representation showing measured results of perpendicular magnetic coercive force of a reference magnetic thin film relative to respective components thereof;

Fig. 9 is a representation showing measured results of surface magnetic coercive force of a reference magnetic thin film relative to respective components thereof;

Fig. 10 is a representation showing measured results of perpendicular anisotropic magnetic field of a reference magnetic thin film relative to respective components thereof;

Fig. 11 is a graph showing measured results of a relationship between oxygen partial pressure in the sputtering-process and a perpendicular coercive force;

Fig. 12 is a like graph showing measured results of a relationship among oxygen partial pressure, perpendicular magnetic coercive force and a perpendicular anisotropic magnetic field;

Fig. 13 is a graph of a magnetization M - magnetic field H characteristic curve of the further embodiment of the magnetic thin film according to the present invention;

Fig. 14 is a graph of a magnetic flux density B - magnetic field H characteristic curve of the other embodiment of a reference magnetic thin film;

Fig. 15 is a representation showing measured results of a perpendicular magnetic coercive force of a reference magnetic thin film relative to respective compositions thereof;

Fig. 16 is a representation showing measured results of a surface magnetic coercive force of a reference magnetic thin film relative to respective compositions thereof;

Fig. 17 is a representation showing measured results of a saturation magnetic flux density of a reference magnetic thin film relative to respective compositions thereof;

Fig. 18 is a representation showing measured results of a perpendicular rectangular ratio of a reference magnetic thin film relative to respective compositions; and

Fig. 19 is a representation showing measured results of a surface rectangular ratio of a reference magnetic thin film relative to respective compositions.

## DETAILED DESCRIPTION OF THE PREFERRED EMBODIMENTS

Now, the present invention will be described with reference to the drawings.

Prior to the explanation of the preferred embodiments, let us first describe the principle of the present invention.

According to the present invention, a magnetic thin film has a composition represented by the following general formula

$$(Co_aPt_bB_cM_d)_{100-x}O_x$$

wherein a, b, c, d and x represent atomic percents of respective elements and satisfy relationships expressed as

$0 < a$

$0 < b \leqq 50$

$0 < c \leqq 30$

$0 < d \leqq 30$

$a + b + c + d = 100$

$0 \leqq x \leqq 15$

and M represents at least one of the following constituents selected from a group of constituents consisting of Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd and Re. The, thus, made magnetic thin film is suitable for being applied to a perpendicular magnetic recording medium having high magnetic coercive force $Hc^\perp$ and high saturation magnetic flux density Bs and which also demonstrates high magnetic anisotropy.

As a modification thereof, the present invention is to provide a magnetic thin film in which d = 0 is satisfied in the above general formula and c is greater than zero. Thus, this magnetic thin film has a composition represented by the following formula:

$$(Co_aPt_bB_c)_{100-x}O_x$$

wherein a, b, c and x represent atomic percents of respective elements and satisfy relationships expressed as

$0 < a$

$0 < b \leqq 50$

$0 < c \leqq 30$

$a + b + c = 100$

$0 < x \leqq 15$

The, thus, formed magnetic thin film is suitable for being applied to a perpendicular magnetic recording medium having high perpendicular anisotropic magnetic field which demonstrates high perpendicular magnetic coercive force $Hc^\perp$ and high saturation magnetic flux density Bs.

Further, as a modification thereof, the present invention intends to provide a magnetic thin film in which c = 0 and d is greater than 0 is satisfied in the general formula. Thus, this magnetic thin film has a composition represented by the following formula:

$$(Co_aPt_bM'_e)_{100-x}O_x$$

4

wherein a, b, e and x represent atomic percents of respective elements and satisfy relationships expressed as

$$0 < a$$
$$0 < b \leqq 50$$
$$0 < e \leqq 30$$
$$a + b + e = 100$$
$$0 < x \leqq 15$$

and M' represents at least one of the following constituents selected from a group of constituents which consists of Ti, Zr, V, Cr, Nb, Mo, Ta and W. The, thus, formed magnetic thin film is suitable for being applied to a perpendicular magnetic recording medium having high perpendicular magnetic coercive force $Hc^{\perp}$ or high saturation magnetic flux density Bs and which demonstrates high perpendicular anisotropic magnetic field.

According to the present invention, a magnetic thin film was formed on a slide glass substrate by means of a magnetron-type sputtering apparatus. The sputtering conditions thereof were, by way of example, as follows:

background vacuum degrees $P_{BG}$: 4.0 x $10^{-6}$ Torr; (1 Torr = 133.3 Pa)

substrate etching : High frequency of 300 W and for 5 minutes;

substrate temperature : room temperature

power for sputtering process : high frequency of 300 W;

argon gas pressure : 8 x $10^{-3}$ Torr;

argon flow amount : 60cm$^3$/minute;

sputtering time : about 10 minutes; and

thickness of magnetic thin film : 5000 Å.

In that case, for reference purposes, a target was prepared in such a manner that three to six fan-shaped chips made of Pt having a thickness of 1 mm and having a predetermined extending angle from a center are formed on a base made of a CoBM-system alloy having a thickness of 3 mm and a diameter of 4 inches. Alternatively, a CoBMPt-system alloy target having a diameter of, for example, 4 inches (1 inch = 2.54 cm) and a thickness of 3 mm was prepared.

## Embodiment 1:

A $Co_{71}Pt_{20}B_7Ti_2$ magnetic thin film was produced by utilizing a complex target and, according to the above-mentioned sputtering-method and under the above-mentioned conditions. In that case, however, the background vacuum degree $P_{BG}$ obtained by exhausting the sputtering chamber before the start of the sputtering-process was varied. Then, oxygen concentrations in the resultant $Co_{71}Pt_{20}B_7Ti_2$ magnetic thin films under the respective background vacuum degrees $P_{BG}$ were measured, respectively. Further, oxygen partial pressures equivalent to the respective background vacuum degrees $P_{BG}$ were measured in comparison with oxygen concentrations in the magnetic thin films. The measured results are indicated in the following TABLE 1.

TABLE 1

| oxygen concentration in the $Co_{71}Pt_{20}B_7Ti_2$ film (atomic percents) | background vacuum degree $P_{BG}$ before sputtering-process (Torr) | oxygen partial pressure $P_{O2}$ equivalent to $P_{BG}$ (Torr) |
|---|---|---|
| 0.3 ~ 0.8 | 1 x $10^{-6}$ | less than 10 x $10^{-6}$ |
| 4.2 ~ 10.7 | 4 x $10^{-6}$ | 50 x $10^{-6}$ |
| 5.5 ~ 13.8 | 20 x $10^{-6}$ | about 200 x $10^{-6}$ |

In the above embodiment, relationships among the oxygen concentration of the $Co_{71}Pt_{20}B_7Ti_2$ film, the background vacuum degree $P_{BG}$ and the oxygen partial pressure $P_{O2}$ were examined. With respect to the CoPtBM-system magnetic thin film of other compositions, substantially similar relationships were demonstrated among their oxygen concentration, the background vacuum degree $P_{BG}$ and oxygen partial pressure $P_{O2}$.

**Embodiment 2:**

Magnetic thin films of various compositions were produced by using the complex target in which Pt chips were mounted on various kinds of alloy targets according to the above-mentioned sputtering-method and under the above-mentioned conditions in which the background vacuum degree $P_{BG}$ was selected to be 4 µTorr.

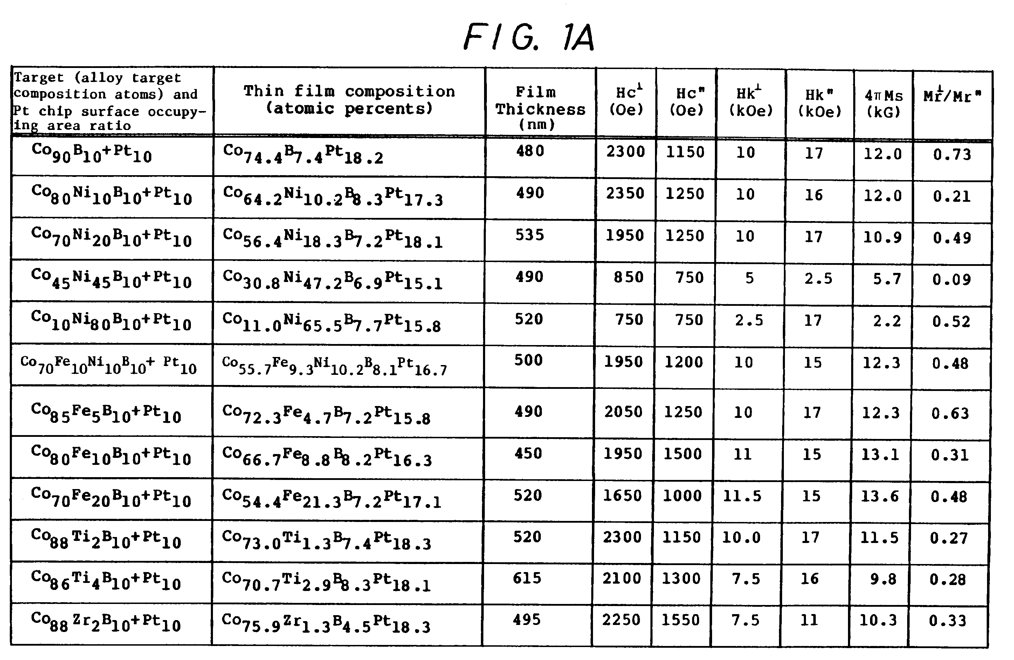

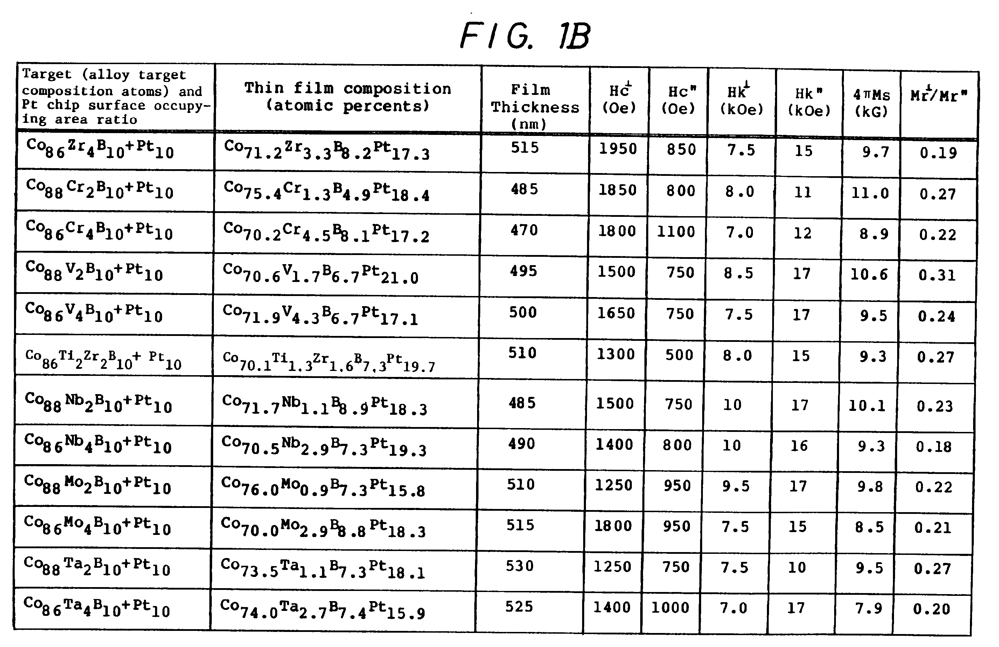

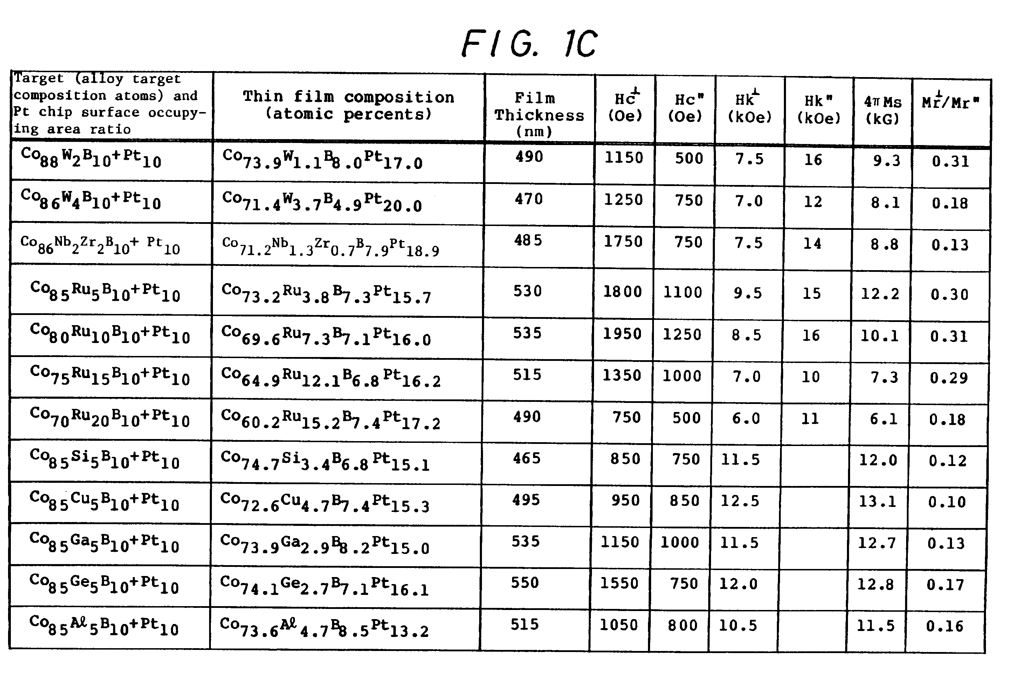

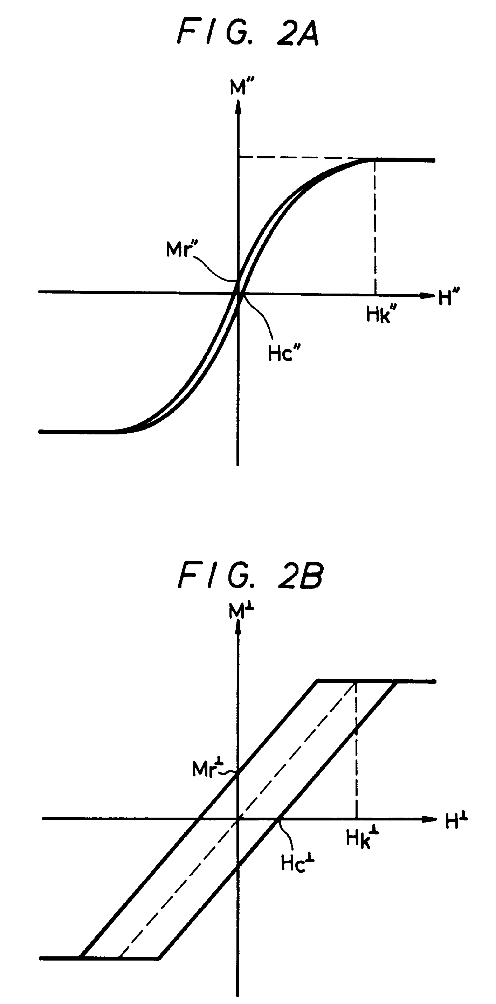

Figs. 1A to 1C contains tables which, in the left-hand column, illustrate compositions (atomic percents) of the targets employed for making each of these magnetic thin films. For example, the starting composition of the alloy of the targets being used and the ratios (percents) of the fan-shaped Pt chips which are located on the targets relative to the total surface area of the overall targets. The next columns have the compositions of the resultant thin films, the film thicknesses thereof and measured results of respective magnetic characteristics of perpendicular magnetic coercive force $Hc^{\perp}$, surface magnetic coercive force $Hc''$, perpendicular anisotropic magnetic field $Hk^{\perp}$, surface anistropic magnetic field $Hk''$, saturation magnetic flux density $4\pi Ms$ (CGS system), and a residual magnetization ratio $Mr^{\perp}/Mr''$, which is between perpendicular residual magnetization $Mr^{\perp}$ and the surface residual magnetization $Mr''$. These magnetic characteristics demonstrate values shown in the diagrams of the surface magnetization curves of Fig. 2A and the perpendicular magnetization curves of Fig. 2B. The magnetic thin films, which are obtained in the tables of Figs. 1A, 1B and 1C, contain oxygen of 4.2 to 10.7 atomic percents as will be clear from the TABLE 1 according to the embodiment 1.

**Embodiment 3:**

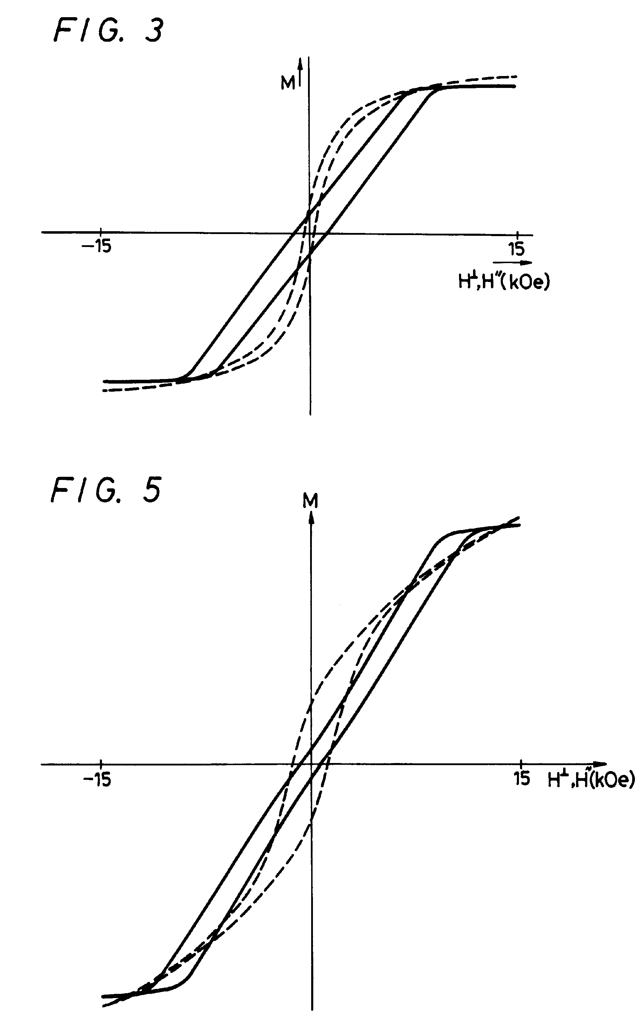

A magnetic thin film having a composition of $(Co_{71}Pt_{20}B_7Ti_2)_{95}O_5$ and having a thickness of 5000 Å was manufactured. Fig. 3 illustrates a magnetic flux density B - magnetic field H curve characteristic. In Fig. 3, a solid line curve indicates a magnetization M - magnetic field H characteristic curve in the perpendicular direction, while a broken line curve indicates a magnetization M - magnetic field H characteristic curve in the surface direction.

Then, the experiments were carried out by utilizing a complex target. This target was formed of an alloy target of CoM-system having a diameter of 4 inches and a thickness of 3 mm. Three to six fan-shaped Pt chips having a thickness of 1 mm were located on the target to extend at predetermined angles from the center of the target. Alternatively, the target was formed of CoMPt-system alloy target having a diameter of, for example, 4 inches and a thickness of 3 mm.

**Embodiment 4:**

A $Co_{76}Pt_{22}Ti_2$ magnetic thin film was produced by utilizing the complex target according to the above-mentioned sputtering-method and under the above-mentioned conditions. In this case, however, the background vacuum degree $P_{BG}$ obtained by exhausting the sputtering chamber prior to the start of the sputtering-process was varied. Then, oxygen concentrations in the $Co_{76}Pt_{22}Ti_2$ magnetic thin films which were obtained under the respective background vacuum degrees $P_{BG}$ were measured. In addition, the oxygen partial pressures equivalent to the respective background vacuum degrees $P_{BG}$ were measured in comparison with the oxygen concentrations in the magnetic thin films. The measured results were indicated in the following TABLE 2.

TABLE 2

| oxygen concentration in the $Co_{76}Pt_{22}Ti_2$ film (atomic percents) | background vacuum degree $P_{BG}$ before sputtering-process (Torr) | oxygen partial pressure equivalent to $P_{BG}$ (Torr) |
|---|---|---|
| 0.3 ∿ 0.8 | $1 \times 10^{-6}$ | less than $10 \times 10^{-6}$ |
| 4.2 ∿ 10.7 | $4 \times 10^{-6}$ | $50 \times 10^{-6}$ |
| 5.5 ∿ 13.8 | $20 \times 10^{-6}$ | about $200 \times 10^{-6}$ |

In this embodiment, relationships among the oxygen concentration in the $Co_{76}Pt_{22}Ti_2$ magnetic thin film, the background vacuum degree $P_{BG}$ and the oxygen partial pressure $P_{O2}$ were examined. With respect to CoPtM-system magnetic thin film having other compositions, there is established a substantially similar relationship among its oxygen concentration, the background vacuum degrees $P_{BG}$ and the oxygen partial pressure $P_{O2}$.

**Embodiment 5**:

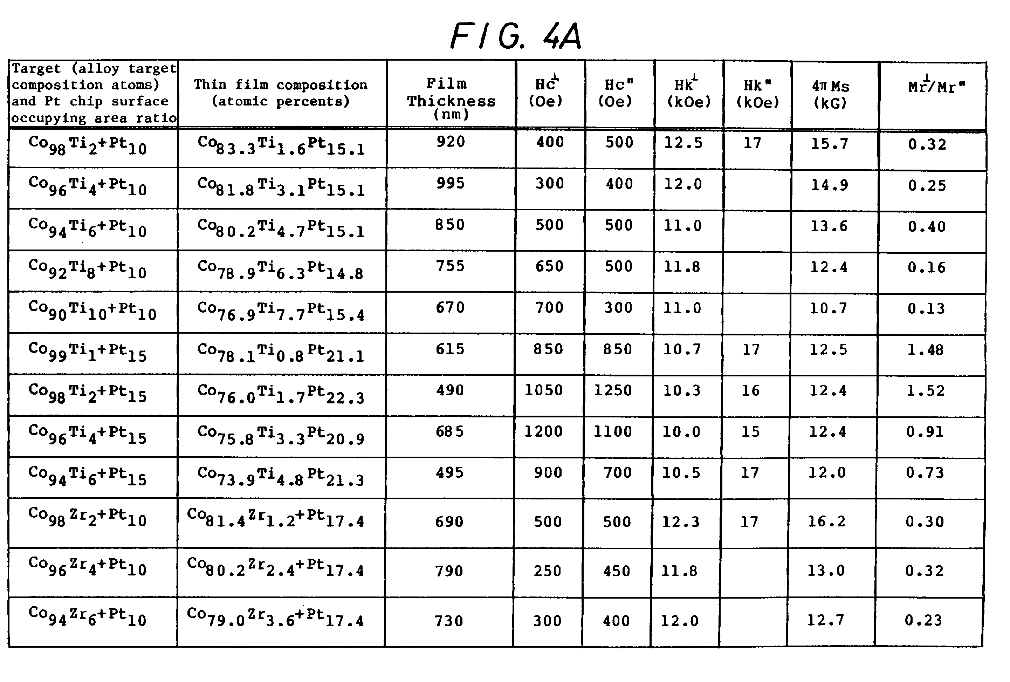

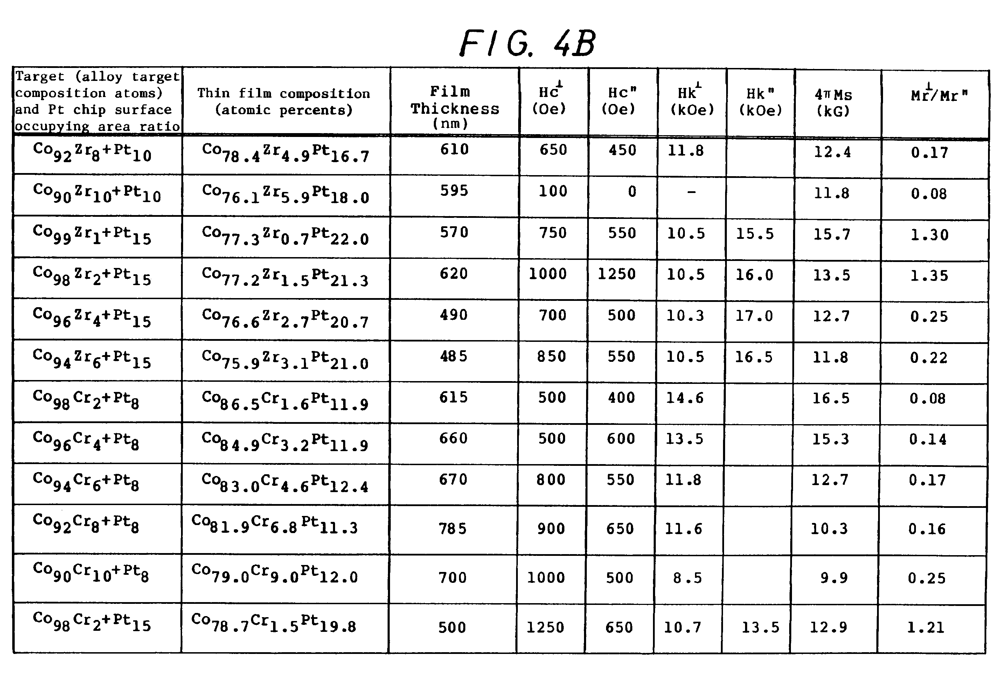

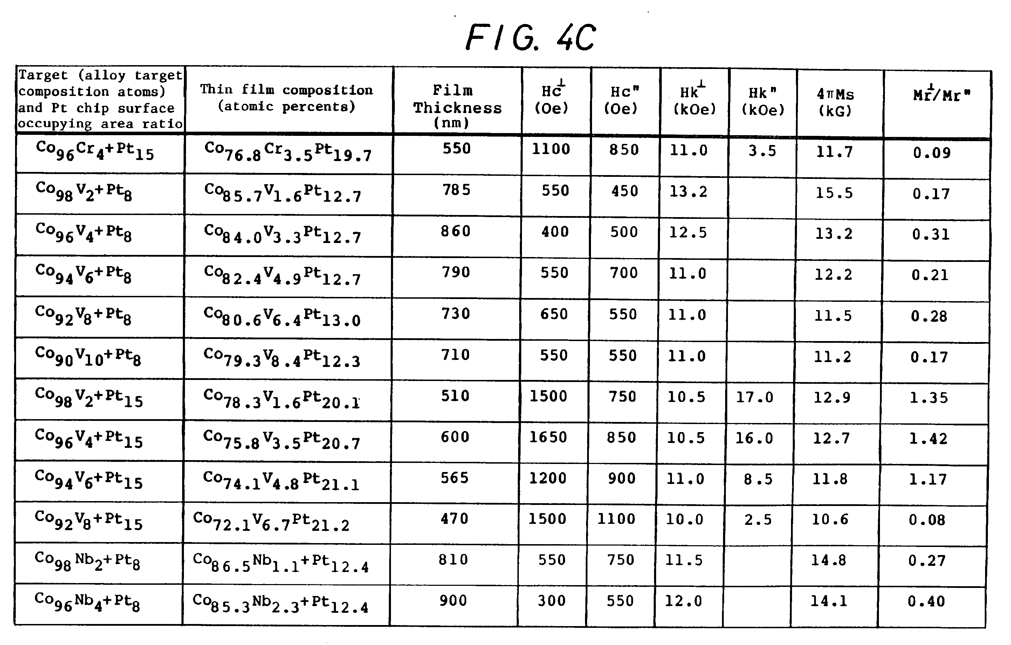

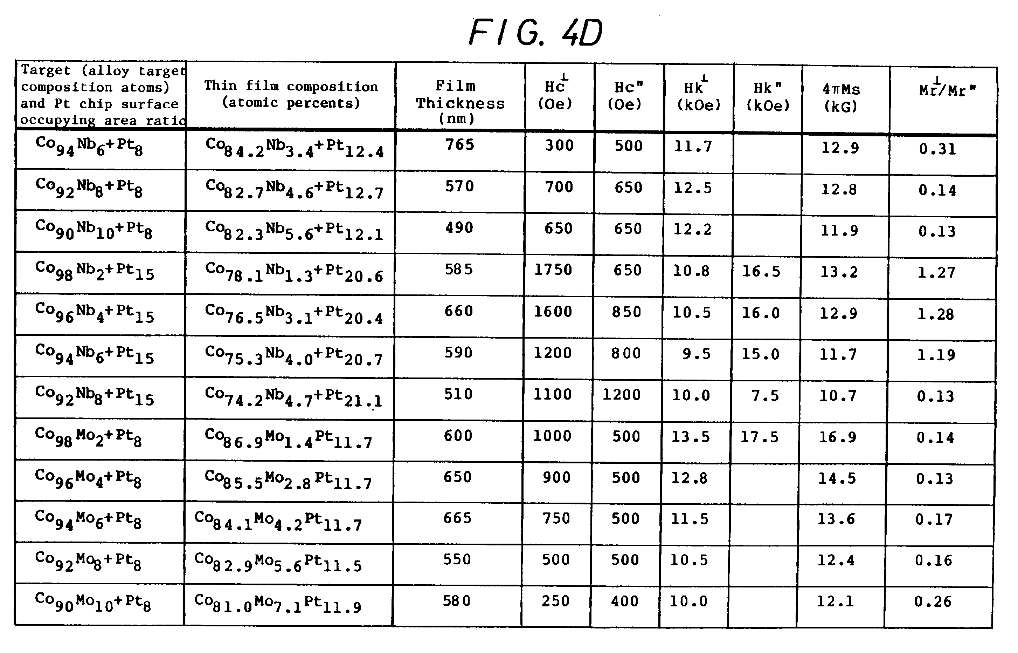

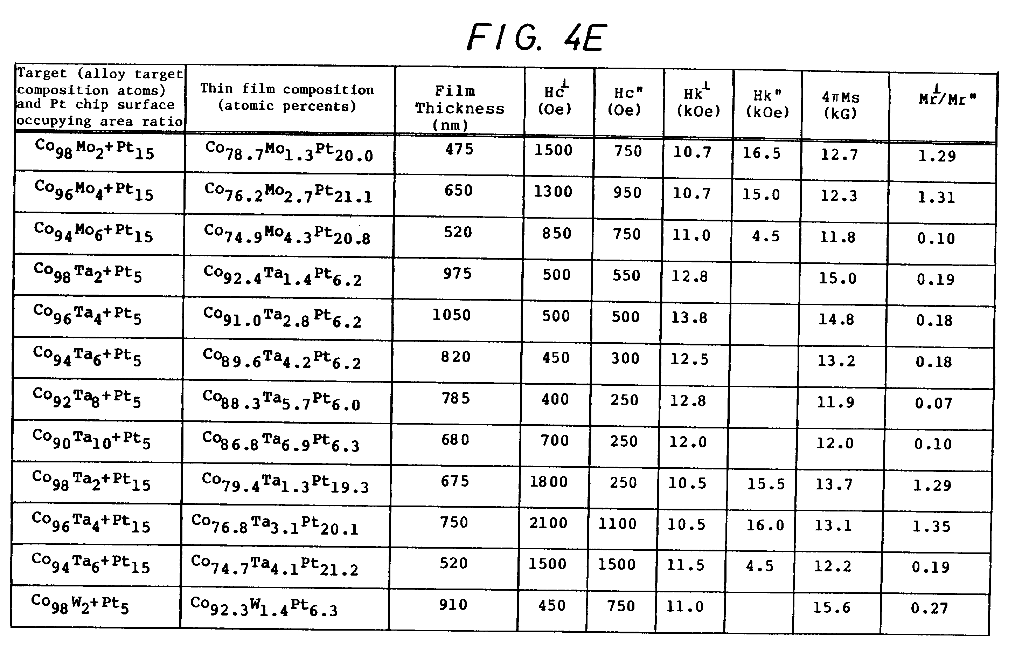

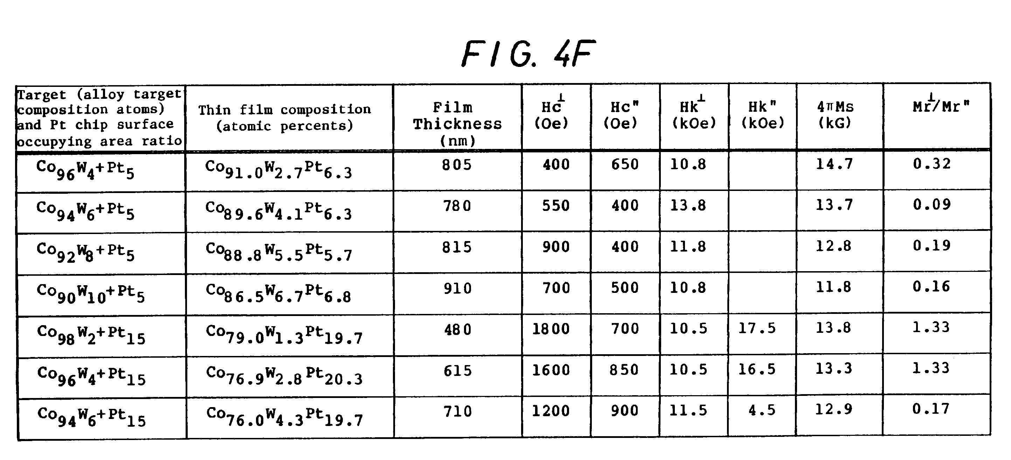

Magnetic thin films having various kinds of compositions were produced by utilizing complex targets which comprise various alloy targets and Pt chips formed thereon according to the above-mentioned method and under the above-mentioned condition where the background vacuum degree $P_{BG}$ was selected to be 4 μ Torr. Figs. 4A to 4F provide tables setting forth measured results of compositions (atomic percents) of the targets used for making these magnetic thin films, i.e., the alloy targets used therein, ratios (percents) with which the fan-shaped Pt chips occupy the total surface area of each of the targets, compositions of the resultant thin films, film thicknesses thereof and magnetic characteristics $Hc^{\perp}$, Hc:, $Hk^{\perp}$, Hk'', 4 Ms, $Mr^{\perp}/Mr''$ thereof. These magnetic characteristics are measured results of various values indicated on the diagram of the surface magnetization curve of Fig. 2A and the perpendicular magnetization curve of Fig. 2B, i.e., perpendicular magnetic coercive force $Hc^{\perp}$, surface coercive force Hc'', anisotropic magnetic fields $Hk^{\perp}$, Hk'', saturation magnetic flux density $4\pi Ms$ (CGS system) and residual magnetization ratio $Mr^{\perp}/Mr''$. The, thus, obtained magnetic thin films contain 4.2 to 10.7 atomic percents of oxygen as will be clear from the TABLE 2 of the embodiment 4.

**Embodiment 6**:

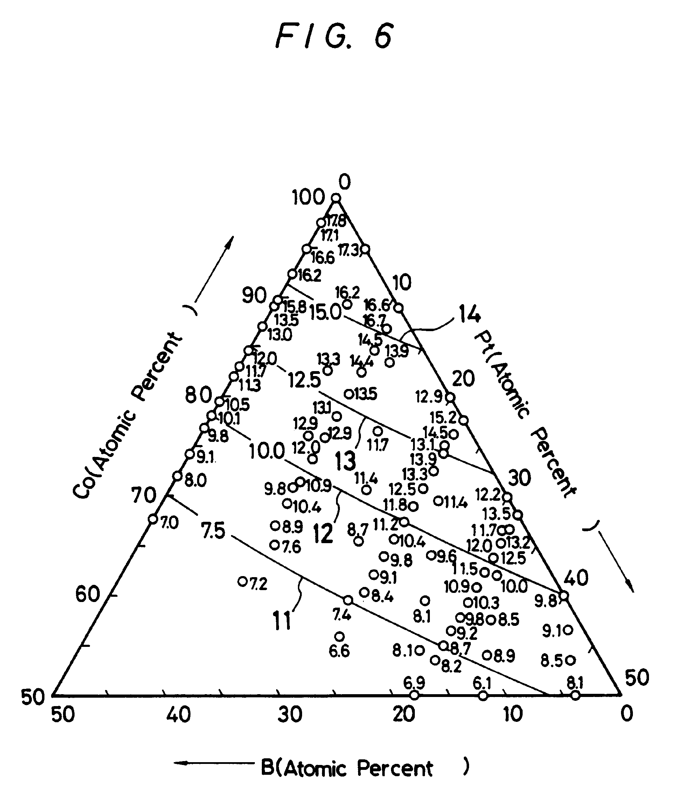

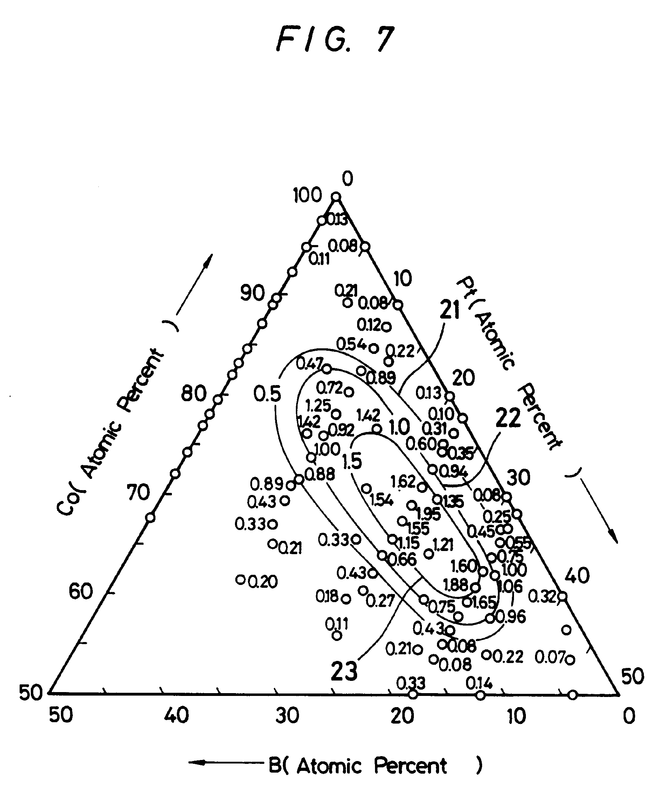

A 5000 Å-thick magnetic thin film having a composition of $(Co_{76}Pt_{22}Ti_2)_{95}O_5$ was produced. Fig. 5 illustrates a magnetization M - magnetic field H characteristic curve in that case. In Fig. 5, a solid curve indicates a magnetization M - magnetic field H characteristic curve in the perpendicular direction and a broken curve indicates a magnetization M - magnetic field H characteristic curve in the surface direction.

Then, for reference purposes the experiments were carried out by utilizing a complex target which had three to six fan-shaped Pt chips, which have a thickness of 1 mm and extend on predetermined angles of 6°, 12° and 18° from the center of the target. The target is a $Co_{100-y}B_y$ alloy target having a diameter of 4 inches and a thickness of 3 mm where y represents atomic percent and satisfies an inequality of $0 \leqq y \leqq 25$. Alternatively, the experiments were carried out by the use of a $Co_aPt_bB_c$ alloy target having a diameter of 4 inches and a thickness of 3 mm, where $\underline{a}$, $\underline{b}$, and $\underline{c}$ represent atomic percents, respectively.

Reference Embodiment 7

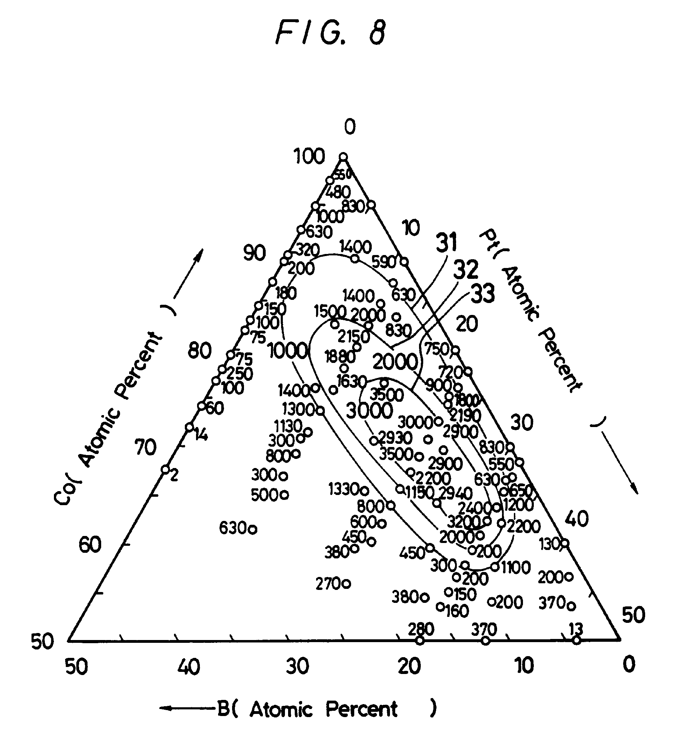

Under the condition that the film compositions were varied by selecting the compositions of the targets, a relationship between compositions and magnetic characteristics thereof were measured. Figs. 6 to 10 illustrate measured results thereof. In each of the graphs of Figs. 6 to 10, the bottom assumes a composition ratio (atomic percent) of B, the left slant leg assumes a composition ratio (atomic percent) of Co and the right slant leg assumes a composition ratio (atomic percent) of Pt. Fig. 6 shows measured results of saturation magnetic flux density Bs $[(4\pi Ms)$ (kG) (CGS system)]. In the graph of Fig. 6, thin curved lines 11, 12, 13 and 14 indicate isopleths in which the saturation magnetic flux density Bs is selected to be 7.5 kG, 10.0 kG, 12.5 kG and 15.0 kG, respectively.

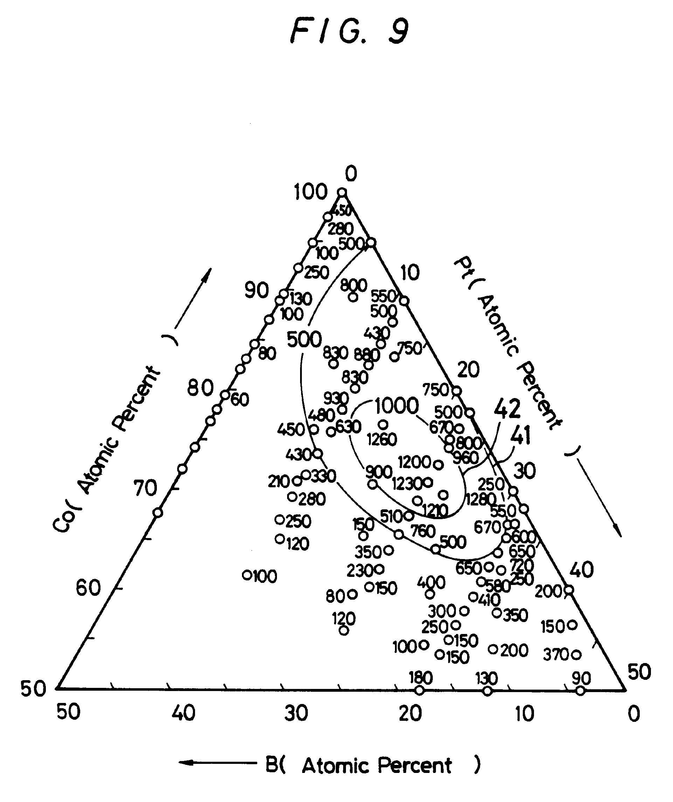

Fig. 7 illustrates measured results of ratio between perpendicular (normal to the film surface of magnetic thin film) residual magnetic flux density $Mr^{\perp}$ and the surface residual magnetic flux density Mr''. In Fig. 7, thin curved lines 21, 22 and 23 indicate isopleths in which $M^{\perp}/Mr''$ is selected to be 0.5, 1.0 and 1.5, respectively.

Fig. 8 shows measured results of perpendicular magnetic coercive force $Hc^{\perp}$(Oe). In Fig. 8, thin curved lines 31, 32 and 33 indicate isopleths in which the perpendicular magnetic coercive force $Hc^{\perp}$ is selected to be 1000 (Oe), 2000 (Oe) and 3000 (Oe), respectively.

Fig. 9 shows measured results of the surface magnetic coercive force Hc'' (Oe). In Fig. 9, thin lines 41 and 42 indicate isopleths in which the surface magnetic coercive force Hc'' is selected to be 500 (Oe) and 1000 (Oe).

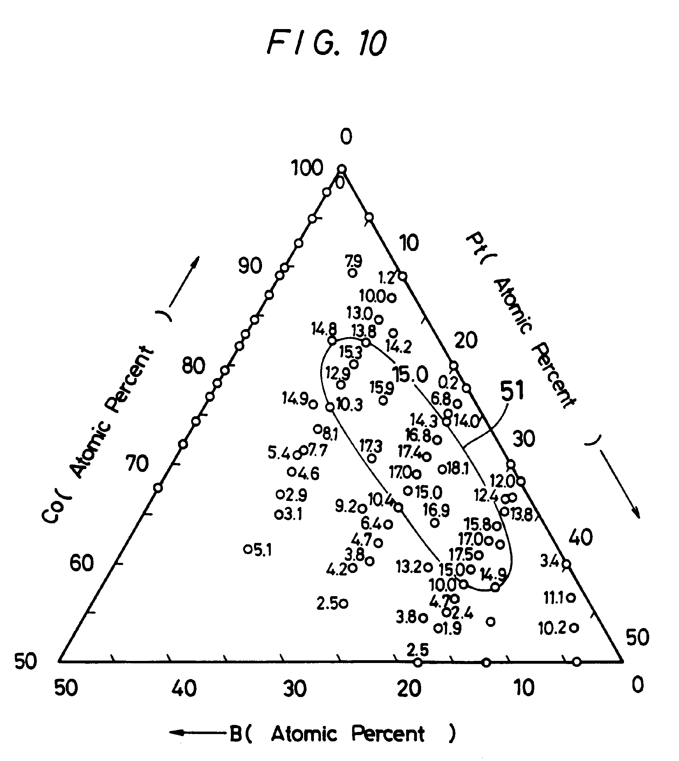

Fig. 10 shows a relationship between the perpendicular anisotropic magnetic field $Hk^{\perp}$(kOe) and each composition. In Fig. 10, a curve 51 indicates an isopleth in which the perpendicular anisotropic magnetic field $Hk^{\perp}$ is selected to be 15.0.

**Embodiment 8:**

A $Co_{71}Pt_{22}B_7$ magnetic thin film was produced according to the method similar to that of the embodiment 7. In that case, the background vacuum degree $P_{BG}$ obtained by exhausting the sputtering chamber prior to the start of the sputtering-process was varied. Then, the oxygen concentrations contained in the resultant $Co_{71}Pt_{22}B_7$ magnetic thin films under the respective vacuum degrees $P_{BG}$ were measured. Further, oxygen partial pressures equivalent to the respective vacuum degrees $P_{BG}$ were measured in comparison with the oxygen concentrations contained in the respective magnetic thin films. The following TABLE 3 illustrates the measured values.

TABLE 3

| oxygen concentration in the $Co_{71}Pt_{22}B_7$ film (atomic percents) | background vacuum degree $P_{BG}$ before sputtering-process (Torr) | oxygen partial pressure $P_{O2}$ equivalent to $P_{BG}$ (Torr) |
|---|---|---|
| 0.3 ∿ 0.8 | $1 \times 10^{-6}$ | less than $10 \times 10^{-6}$ |
| 4.2 ∿ 10.7 | $4 \times 10^{-6}$ | $50 \times 10^{-6}$ |
| 5.5 ∿ 13.8 | $20 \times 10^{-6}$ | about $200 \times 10^{-6}$ |

In this embodiment, a relationship among the oxygen concentration contained in the $Co_{71}Pt_{22}B_7$ magnetic thin film, the background vacuum degree $P_{BG}$ and the oxygen partial pressure $P_{O2}$ was examined. With respect to CoPtB-system magnetic thin films having other compositions, a relationship among the oxygen concentration, the background vacuum degree $P_{BG}$ and the oxygen partial pressure $P_{O2}$ becomes substantially similar.

**Embodiment 9:**

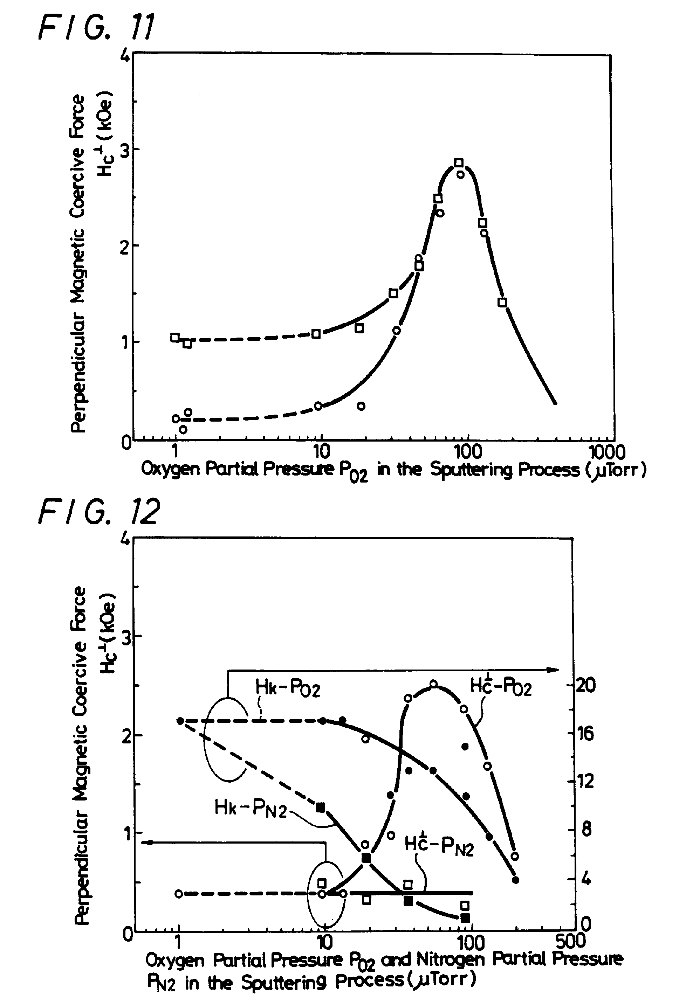

A $Co_{77}Pt_{16}B_7$ magnetic thin film was produced by utilizing the alloy target in the method forming the embodiment 7. Fig. 11 shows measured results of a relationship between the oxygen partial pressure (abscissa) in the sputtering-process and the perpendicular magnetic coercive force Hc (ordinate) with respect to the samples obtained under the condition that the background vacuum degree $P_{BG}$ was selected to be 1 μTorr and that the oxygen partial pressure in the sputtering-process was varied. In Fig. 11, an open square indicates measured result in which a Pt layer having a thickness of about 1500 Å was deposited under the magnetic thin film as an under layer and an open circle shows measured result in which the under layer was not provided.

**Embodiment 10:**

In the embodiment 7, a magnetic thin film was produced by utilizing a complex target in which six fan-shaped Pt chips having an extending angle of 6° were mounted on a $Co_{92}B_8$ alloy target. Fig. 12 shows measured results of the perpendicular magnetic coercive force Hc⊥ and the perpendicular anisotropic magnetic field Hk with respect to samples obtained under the condition that the background vacuum degrees $P_{BG}$ was selected to be 1 μTorr and that the oxygen partial pressure $P_{O2}$ (abscissa) in the sputtering-process and the nitrogen partial pressure $P_{N2}$ (abscissa) were changed. In Fig. 12, an open circle indicates measured results of the perpendicular magnetic coercive force Hc⊥ and a solid circle indicates measured results of the perpendicular anisotropic magnetic field Hk relative to the oxygen partial pressure $p_{O2}$, while an open square and solid square indicate measured results of the perpendicular magnetic coercive force Hc⊥ and the perpendicular anisotropic magnetic field Hk, respectively, relative to the nitrogen partial pressure $P_{N2}$.

**Embodiment 11:**

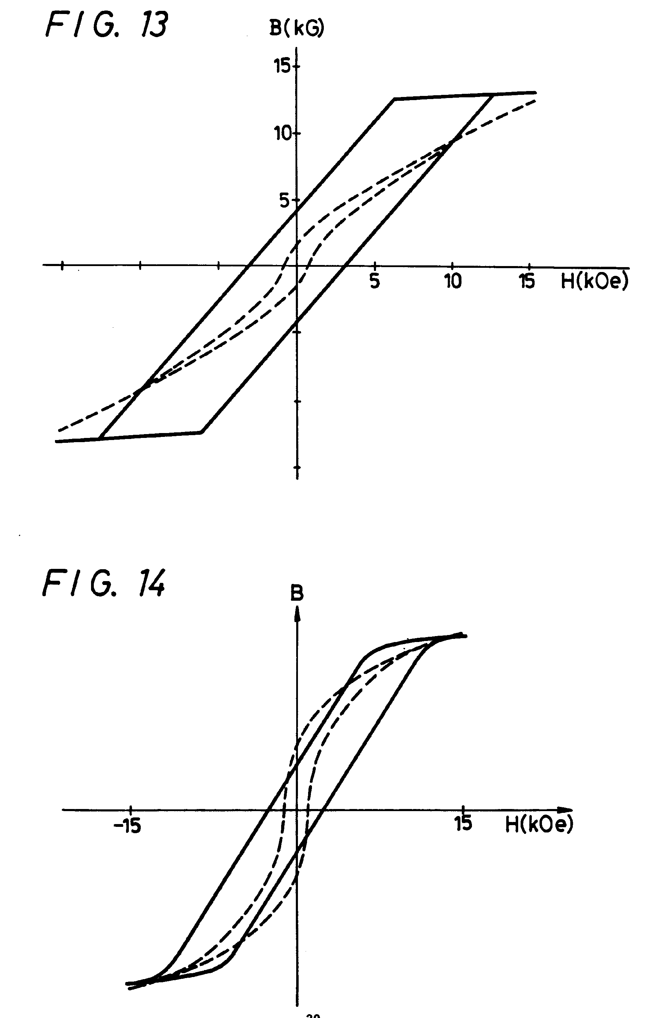

A magnetic thin film having a composition of $(Co_{71}Pt_{22}B_7)_{95}O_5$ was produced under the condition that the background vacuum degree $P_{BG}$ was varied in the embodiment 7. Fig. 13 illustrates a magnetization M - magnetic field H characteristic curve in that case. In Fig. 13, a solid line curve is a magnetization M - magnetic field H characteristic curve in the perpendicular direction to the surface and a broken line curve is a magnetization M - magnetic field H characteristic curve in the surface direction. It should be understood from the above-mentioned curves that the resultant magnetic thin film is formed as an excellent perpendicular magnetization film having high magnetic coercive force Hc in the vertical or perpendicular direction.

Reference Embodiment 12:

A $Co_{75}Pt_{15}B_{10}$ magnetic thin film having a thickness of 3000 Å was produced according to the similar method and under the similar condition. Fig. 14 illustrates a magnetic flux B - magnetic field H characteristic of the, thus, made magnetic thin film. In Fig. 14, a solid line curve indicates a perpendicular magnetization curve and a broken line curve indicates a surface magnetization curve, respectively. In this case, the following values were as follows:

saturation magnetic flux density Bs - 11.5 (kG);

perpendicular magnetic coercive force $Hc^{\perp}$ = 2.5 (kOe);

perpendicular rectangular ratio (residual magnetization Mr/saturation magnetization Ms)$^{\perp}$ = 0.25

perpendicular anisotropic magnetic field Hk = 6 to 12 (kOe).

Reference Embodiment 13:

A magnetic thin film was produced in a similar manner to that of the embodiment 12. In that case, the film composition was selected as $Co_{85}Pt_5B_{10}$. In this case, the resultant magnetic characteristics were as follows:

saturation magnetic flux density Bs = 15 (kG);

surface magnetic coercive force $Hc''$ ≥ 850 (Oe);

(Mr/Ms)'' in the surface direction ≥ 0.6.

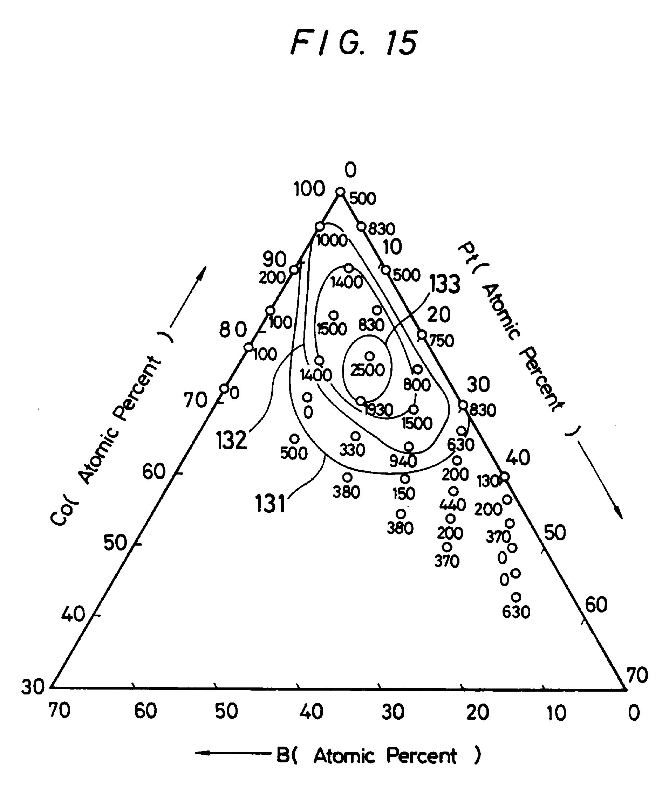

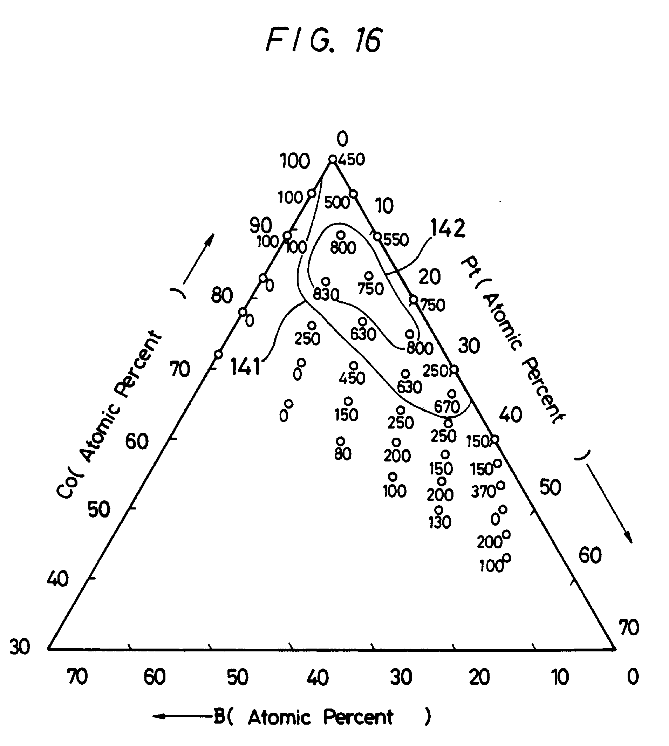

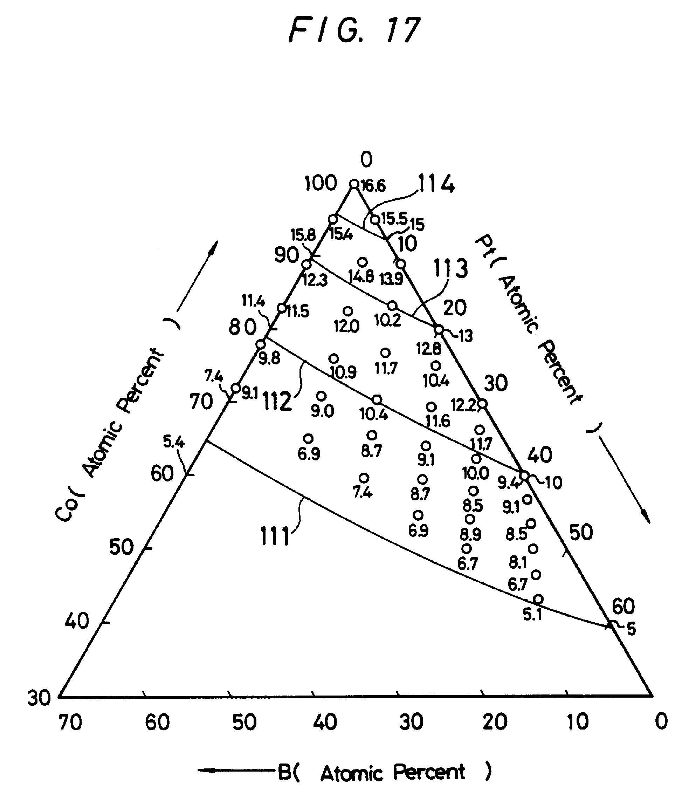

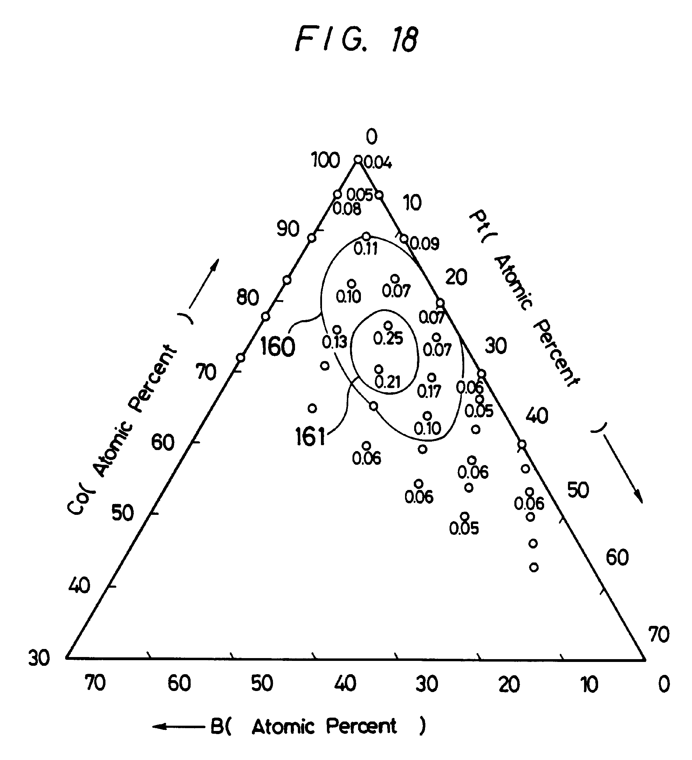

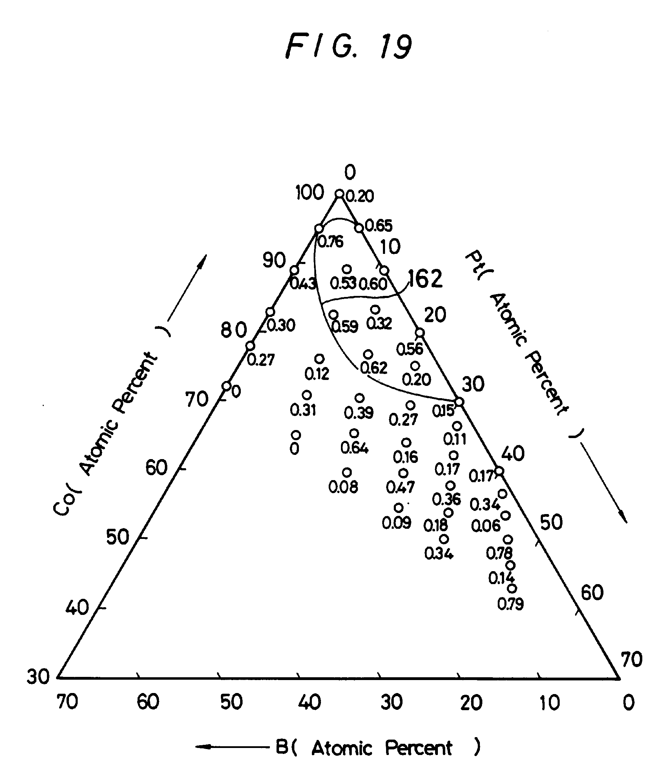

Figs. 15 to 19 show measured results of a relationship between compositions and magnetic characteristics under the condition that the film compositions in the embodiment 13 were varied. Throughout Figs. 15 to 19, the bottom assumes a composition ratio (atomic percent) of B, the left slant leg assumes a composition ratio (atomic percent) of Co and the right slant leg assumes a composition ratio (atomic percent) of Pt. Fig. 15 shows measured results of the perpendicular magnetic coercive force $Hc^{\perp}$ (Oe). Isopleths of 500 (Oe), 1000 (Oe), 1500 (Oe) and 2000 (Oe) are marked on the graph forming Fig. 15 as lines 131, 132 and 133, respectively. Fig. 16 shows measured results of the surface magnetic coercive force $Hc''$ (Oe), and isopleths of 500 (Oe) and 800 (Oe) are marked on the graph forming Fig. 16 as lines 141 and 142, respectively. Fig. 17 shows measured results of the saturation magnetic flux density 4 Ms (kG), and isopleths of 5 (kG), 10 (kG), 13 (kG) and 15 (kG) are marked on the graph forming Fig. 17 as lines 111, 112, 113 and 114, respectively. Fig. 18 shows measured results of the perpendicular rectangular ration (Mr/Ms)$^{\perp}$, and isopleths of 0.1 and 0.2 are marked on the graph forming Fig. 18 by lines 160 and 161, respectively. Fig. 19 shows measured results of the surface rectangular ratio (Mr/Ms)'', and an isopleth of 0.5 is marked on the graph which forms Fig. 19 by line 162.

The above-mentioned magnetic characteristics are respectively measured by means of a so-called VSM (vibration sample-type magnetization characteristic measuring apparatus). The compositions of the thin films are respectively measured by using an electron probe micro-analysis (EPMA) together with an IPS (inductively coupled plasma analysis) light emission analysis. The oxygen concentrations in the thin films on the TABLE 1 are measured in comparison with standard samples of which oxygen dose amounts are clear by means of an SIMS (secondary ion mass spectrometer) method together with the EPMA method.

While the slide glass substrate is used as the substrate in each of the above-mentioned embodiments, it is possible to use various substrates such as a polyamide resin substrate, a crystallized glass substrate, the PET substrate and the like.

According to the present invention as set forth above, it is possible to obtain the magnetic thin film which can provide, without increasing the substrate temperature in the film growing process and even in the film thickness near or less than, for example, 5000 Å, the high perpendicular magnetic coercive force $Hc^{\perp}$, the high saturation magnetic flux density $4\pi Ms$ (CGS system) and the high perpendicular anisotropic magnetic filed $Hk^{\perp}$. In other words, according to the present invention, it is possible to obtain a magnetic thin film which is excellent as the perpendicular magnetic recording medium.

Furthermore, according to the present invention, since the magnetic thin film is grown at room temperature, there are achieved large practical advantages, such that the inexpensive substrate, for example, the PET substrate or the like, can be utilized.

It should be understood that the above description is presented by way of example on the preferred embodiments of the invention and it will be apparent that many modifications and variations thereof could be effected by one with ordinary skill in the art without departing from the scope of the invention as defined by the appended claims.

**Claims**

1. A magnetic thin film having a composition represented by the following formula:

$$(Co_aPt_bB_c)_{100-x}O_x$$

wherein a, b, c, and x represent atomic percents of respective elements and satisfy relationships expressed as

$0 < a$
$0 < b \leqq 50$
$0 < c \leqq 30$
$a + b + c = 100$
$0 < x \leqq 15$

2. A magnetic thin film having a composition represented by the following formula:

$$(Co_aPt_bB_cM_d)_{100-x}O_x$$

wherein a, b, c, d and x represent atomic percents of respective elements and satisfy relationships expressed as

$0 < a$
$0 < b \leqq 50$
$0 < c \leqq 30$
$0 < d \leqq 30$
$a + b + c + d = 100$
$0 \leqq x \leqq 15$

and M represents at least one of the following constituents selected from the group consisting of Ti, Zr, V, Cr, Nb, Mo, Ta, W, Fe, Ni, Si, Al, Ge, Ga, In, Sn, Pb, Sb, Bi, P, Se, C, Zn. Cu, Ag, Au, Ru, Pd and Re.

3. A magnetic thin film having a composition represented by the following formula:

$$(Co_aPt_bM'_e)_{100-x}O_x$$

wherein a, b, e and x represent atomic percents of respective elements and satisfy relationships expressed as

$0 < a$
$0 < b \leqq 50$
$0 < e \leqq 30$
$a + b + e = 100$
$0 < x \leqq 15$

and M' represents at least one of the following constituents selected from the group consisting of Ti, Zr, V, Cr, Nb, Mo, Ta and W.

4. A magnetic recording medium comprising a magnetic thin film according to any of claims 1 to 3.

**Patentansprüche**

1. Magnetischer Dünnfilm mit einer Zusammensetzung der folgenden Formel:

$$(Co_aPt_bB_c)_{100-x}O_x$$

worin a, b, c und x Atmoprozente der jeweiligen Elemente darstellen und den folgenden Beziehungen genügen

$0 < a$
$0 < b \leqq 50$
$0 < c \leqq 30$
$a + b + c = 100$
$0 < x \leqq 15$

2. Magnetischer Dünnfilm mit einer Zusammensetzung der folgenden Formel:

$$(Co_aPt_bB_cM_d)_{100-x}O_x$$

worin a, b, c, d und x Atomprozente der jeweiligen Element darstellen und den folgenden Beziehungen genügen

$0 < a$

$0 < b \leqq 50$

$0 < c \leqq 30$

$0 < d \leqq 30$

$a + b + c + d = 100$

$0 \leqq x \leqq 15$

und M mindestens einen der folgenden Bestandteile, gewählt aus der Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd und Re umfassenden Gruppe, bedeutet.

3.  Mgnetischer Dünnfilm mit einer Zusammensetzung der folgenden Formel:

$$(Co_aPt_bM'_e)_{100-x}O_x$$

worin a, b, e und x Atomprozente derjeweiligen Elemente bedeuten und den folgenden Beziehungen genügen

$0 < a$

$0 < b \leqq 50$

$0 < e \leqq 30$

$a + b + e = 100$

$0 < x \leqq 15$

und M' mindestens einen der folgenden Bestandteile, gewählt aus der Ti, Zr, V, Cr, Nb, Mo, Ta und W umfassenden Gruppe bedeutet.

4.  Magnetisches Aufzeichnungsmedium, umfassend einen magnetischen Dünnfilm nach mindestens einem der Ansprüche 1 bis 3.


**Revendications**

1.  Film magnétique mince ayant une composition représentée par la formule suivante :

$$(Co_aPt_bB_c)_{100-x}O_x$$

où a, b, c et x représentent les pourcentages atomiques de chaque élément et répondent aux relations suivantes

$0 < a$

$0 < b \leqq 50$

$0 < c \leqq 30$

$a + b + c = 100$

$0 < x \leqq 15$

2.  Film magnétique mince ayant la composition représentée par la formule suivante :

$$(Co_aPt_bB_cM_d)_{100-x}O_x$$

où a, b, c, d et x représentent les pourcentages atomiques de chaque élément et répondent aux relations exprimées par

$0 < a$

$0 < b \leqq 50$

$0 < c \leqq 30$

$0 < d \leqq 30$

$a + b + c + d = 100$

$0 \leqq x \leqq 15$

et M représente au moins l'un des constituants choisis dans le groupe constitué de Ti, Zr, V, Cr, Nb, Mo, Ta, W, Fe, Ni, Si, Al, Ge, Ga, In, Sn, Pb, Sb, Bi, P, Se, C, Zn, Cu, Ag, Au, Ru, Pd et Re.

3.  Film mince magnétique ayant une composition représentée par la formule suivante :

$$(Co_aPt_bM'_e)_{100-x}O_x$$

où a, b, e et x représentent les pourcentages atomiques de chaque élément et répondent aux relations exprimées par

$0 < a$

$0 < b \leqq 50$

$0 < e \leqq 30$

$a + b + c = 100$

$0 < x \leqq 15$

et M' représente au moins l'un des constituants suivants choisis dans le groupe constitué de Ti, Zr, V, Cr, Nb, Mo, Ta et W.

4.  Milieu d'enregistrement magnétique comprenant un film mince magnétique selon l'une quelconque des revendications 1 à 3.

FIG. 1A

| Target (alloy target composition atoms) and Pt chip surface occupying area ratio | Thin film composition (atomic percents) | Film Thickness (nm) | $Hc^{\perp}$ (Oe) | $Hc^{\shortparallel}$ (Oe) | $Hk^{\perp}$ (kOe) | $Hk^{\shortparallel}$ (kOe) | $4\pi Ms$ (kG) | $Mr^{\perp}/Mr^{\shortparallel}$ |
|---|---|---|---|---|---|---|---|---|
| $Co_{90}B_{10}+Pt_{10}$ | $Co_{74.4}B_{7.4}Pt_{18.2}$ | 480 | 2300 | 1150 | 10 | 17 | 12.0 | 0.73 |
| $Co_{80}Ni_{10}B_{10}+Pt_{10}$ | $Co_{64.2}Ni_{10.2}B_{8.3}Pt_{17.3}$ | 490 | 2350 | 1250 | 10 | 16 | 12.0 | 0.21 |
| $Co_{70}Ni_{20}B_{10}+Pt_{10}$ | $Co_{56.4}Ni_{18.3}B_{7.2}Pt_{18.1}$ | 535 | 1950 | 1250 | 10 | 17 | 10.9 | 0.49 |
| $Co_{45}Ni_{45}B_{10}+Pt_{10}$ | $Co_{30.8}Ni_{47.2}B_{6.9}Pt_{15.1}$ | 490 | 850 | 750 | 5 | 2.5 | 5.7 | 0.09 |
| $Co_{10}Ni_{80}B_{10}+Pt_{10}$ | $Co_{11.0}Ni_{65.5}B_{7.7}Pt_{15.8}$ | 520 | 750 | 750 | 2.5 | 17 | 2.2 | 0.52 |
| $Co_{70}Fe_{10}Ni_{10}B_{10}+Pt_{10}$ | $Co_{55.7}Fe_{9.3}Ni_{10.2}B_{8.1}Pt_{16.7}$ | 500 | 1950 | 1200 | 10 | 15 | 12.3 | 0.48 |
| $Co_{85}Fe_5B_{10}+Pt_{10}$ | $Co_{72.3}Fe_{4.7}B_{7.2}Pt_{15.8}$ | 490 | 2050 | 1250 | 10 | 17 | 12.3 | 0.63 |
| $Co_{80}Fe_{10}B_{10}+Pt_{10}$ | $Co_{66.7}Fe_{8.8}B_{8.2}Pt_{16.3}$ | 450 | 1950 | 1500 | 11 | 15 | 13.1 | 0.31 |
| $Co_{70}Fe_{20}B_{10}+Pt_{10}$ | $Co_{54.4}Fe_{21.3}B_{7.2}Pt_{17.1}$ | 520 | 1650 | 1000 | 11.5 | 15 | 13.6 | 0.48 |
| $Co_{88}Ti_2B_{10}+Pt_{10}$ | $Co_{73.0}Ti_{1.3}B_{7.4}Pt_{18.3}$ | 520 | 2300 | 1150 | 10.0 | 17 | 11.5 | 0.27 |
| $Co_{86}Ti_4B_{10}+Pt_{10}$ | $Co_{70.7}Ti_{2.9}B_{8.3}Pt_{18.1}$ | 615 | 2100 | 1300 | 7.5 | 16 | 9.8 | 0.28 |
| $Co_{88}Zr_2B_{10}+Pt_{10}$ | $Co_{75.9}Zr_{1.3}B_{4.5}Pt_{18.3}$ | 495 | 2250 | 1550 | 7.5 | 11 | 10.3 | 0.33 |

EP 0 330 116 B1

# FIG. 1B

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{86}Zr_4B_{10}+Pt_{10}$ | $Co_{71.2}Zr_{3.3}B_{8.2}Pt_{17.3}$ | 515 | 1950 | 850 | 7.5 | 15 | 9.7 | 0.19 |
| $Co_{88}Cr_2B_{10}+Pt_{10}$ | $Co_{75.4}Cr_{1.3}B_{4.9}Pt_{18.4}$ | 485 | 1850 | 800 | 8.0 | 11 | 11.0 | 0.27 |
| $Co_{86}Cr_4B_{10}+Pt_{10}$ | $Co_{70.2}Cr_{4.5}B_{8.1}Pt_{17.2}$ | 470 | 1800 | 1100 | 7.0 | 12 | 8.9 | 0.22 |
| $Co_{88}V_2B_{10}+Pt_{10}$ | $Co_{70.6}V_{1.7}B_{6.7}Pt_{21.0}$ | 495 | 1500 | 750 | 8.5 | 17 | 10.6 | 0.31 |
| $Co_{86}V_4B_{10}+Pt_{10}$ | $Co_{71.9}V_{4.3}B_{6.7}Pt_{17.1}$ | 500 | 1650 | 750 | 7.5 | 17 | 9.5 | 0.24 |
| $Co_{86}Ti_2Zr_2B_{10}+Pt_{10}$ | $Co_{70.1}Ti_{1.3}Zr_{1.6}B_{7.3}Pt_{19.7}$ | 510 | 1300 | 500 | 8.0 | 15 | 9.3 | 0.27 |
| $Co_{88}Nb_2B_{10}+Pt_{10}$ | $Co_{71.7}Nb_{1.1}B_{8.9}Pt_{18.3}$ | 485 | 1500 | 750 | 10 | 17 | 10.1 | 0.23 |
| $Co_{86}Nb_4B_{10}+Pt_{10}$ | $Co_{70.5}Nb_{2.9}B_{7.3}Pt_{19.3}$ | 490 | 1400 | 800 | 10 | 16 | 9.3 | 0.18 |
| $Co_{88}Mo_2B_{10}+Pt_{10}$ | $Co_{76.0}Mo_{0.9}B_{7.3}Pt_{15.8}$ | 510 | 1250 | 950 | 9.5 | 17 | 9.8 | 0.22 |
| $Co_{86}Mo_4B_{10}+Pt_{10}$ | $Co_{70.0}Mo_{2.9}B_{8.8}Pt_{18.3}$ | 515 | 1800 | 950 | 7.5 | 15 | 8.5 | 0.21 |
| $Co_{88}Ta_2B_{10}+Pt_{10}$ | $Co_{73.5}Ta_{1.1}B_{7.3}Pt_{18.1}$ | 530 | 1250 | 750 | 7.5 | 10 | 9.5 | 0.27 |
| $Co_{86}Ta_4B_{10}+Pt_{10}$ | $Co_{74.0}Ta_{2.7}B_{7.4}Pt_{15.9}$ | 525 | 1400 | 1000 | 7.0 | 17 | 7.9 | 0.20 |

EP 0 330 116 B1

## FIG. 1C

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{88}W_2B_{10}+Pt_{10}$ | $Co_{73.9}W_{1.1}B_{8.0}Pt_{17.0}$ | 490 | 1150 | 500 | 7.5 | 16 | 9.3 | 0.31 |
| $Co_{86}W_4B_{10}+Pt_{10}$ | $Co_{71.4}W_{3.7}B_{4.9}Pt_{20.0}$ | 470 | 1250 | 750 | 7.0 | 12 | 8.1 | 0.18 |
| $Co_{86}Nb_2Zr_2B_{10}+Pt_{10}$ | $Co_{71.2}Nb_{1.3}Zr_{0.7}B_{7.9}Pt_{18.9}$ | 485 | 1750 | 750 | 7.5 | 14 | 8.8 | 0.13 |
| $Co_{85}Ru_5B_{10}+Pt_{10}$ | $Co_{73.2}Ru_{3.8}B_{7.3}Pt_{15.7}$ | 530 | 1800 | 1100 | 9.5 | 15 | 12.2 | 0.30 |
| $Co_{80}Ru_{10}B_{10}+Pt_{10}$ | $Co_{69.6}Ru_{7.3}B_{7.1}Pt_{16.0}$ | 535 | 1950 | 1250 | 8.5 | 16 | 10.1 | 0.31 |
| $Co_{75}Ru_{15}B_{10}+Pt_{10}$ | $Co_{64.9}Ru_{12.1}B_{6.8}Pt_{16.2}$ | 515 | 1350 | 1000 | 7.0 | 10 | 7.3 | 0.29 |
| $Co_{70}Ru_{20}B_{10}+Pt_{10}$ | $Co_{60.2}Ru_{15.2}B_{7.4}Pt_{17.2}$ | 490 | 750 | 500 | 6.0 | 11 | 6.1 | 0.18 |
| $Co_{85}Si_5B_{10}+Pt_{10}$ | $Co_{74.7}Si_{3.4}B_{6.8}Pt_{15.1}$ | 465 | 850 | 750 | 11.5 | | 12.0 | 0.12 |
| $Co_{85}Cu_5B_{10}+Pt_{10}$ | $Co_{72.6}Cu_{4.7}B_{7.4}Pt_{15.3}$ | 495 | 950 | 850 | 12.5 | | 13.1 | 0.10 |
| $Co_{85}Ga_5B_{10}+Pt_{10}$ | $Co_{73.9}Ga_{2.9}B_{8.2}Pt_{15.0}$ | 535 | 1150 | 1000 | 11.5 | | 12.7 | 0.13 |
| $Co_{85}Ge_5B_{10}+Pt_{10}$ | $Co_{74.1}Ge_{2.7}B_{7.1}Pt_{16.1}$ | 550 | 1550 | 750 | 12.0 | | 12.8 | 0.17 |
| $Co_{85}Al_5B_{10}+Pt_{10}$ | $Co_{73.6}Al_{4.7}B_{8.5}Pt_{13.2}$ | 515 | 1050 | 800 | 10.5 | | 11.5 | 0.16 |

EP 0 330 116 B1

# F I G. 2A

# F I G. 2B

16

FIG. 3

FIG. 5

17

## FIG. 4A

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{98}Ti_2+Pt_{10}$ | $Co_{83.3}Ti_{1.6}Pt_{15.1}$ | 920 | 400 | 500 | 12.5 | 17 | 15.7 | 0.32 |
| $Co_{96}Ti_4+Pt_{10}$ | $Co_{81.8}Ti_{3.1}Pt_{15.1}$ | 995 | 300 | 400 | 12.0 | | 14.9 | 0.25 |
| $Co_{94}Ti_6+Pt_{10}$ | $Co_{80.2}Ti_{4.7}Pt_{15.1}$ | 850 | 500 | 500 | 11.0 | | 13.6 | 0.40 |
| $Co_{92}Ti_8+Pt_{10}$ | $Co_{78.9}Ti_{6.3}Pt_{14.8}$ | 755 | 650 | 500 | 11.8 | | 12.4 | 0.16 |
| $Co_{90}Ti_{10}+Pt_{10}$ | $Co_{76.9}Ti_{7.7}Pt_{15.4}$ | 670 | 700 | 300 | 11.0 | | 10.7 | 0.13 |
| $Co_{99}Ti_1+Pt_{15}$ | $Co_{78.1}Ti_{0.8}Pt_{21.1}$ | 615 | 850 | 850 | 10.7 | 17 | 12.5 | 1.48 |
| $Co_{98}Ti_2+Pt_{15}$ | $Co_{76.0}Ti_{1.7}Pt_{22.3}$ | 490 | 1050 | 1250 | 10.3 | 16 | 12.4 | 1.52 |
| $Co_{96}Ti_4+Pt_{15}$ | $Co_{75.8}Ti_{3.3}Pt_{20.9}$ | 685 | 1200 | 1100 | 10.0 | 15 | 12.4 | 0.91 |
| $Co_{94}Ti_6+Pt_{15}$ | $Co_{73.9}Ti_{4.8}Pt_{21.3}$ | 495 | 900 | 700 | 10.5 | 17 | 12.0 | 0.73 |
| $Co_{98}Zr_2+Pt_{10}$ | $Co_{81.4}Zr_{1.2}+Pt_{17.4}$ | 690 | 500 | 500 | 12.3 | 17 | 16.2 | 0.30 |
| $Co_{96}Zr_4+Pt_{10}$ | $Co_{80.2}Zr_{2.4}+Pt_{17.4}$ | 790 | 250 | 450 | 11.8 | | 13.0 | 0.32 |
| $Co_{94}Zr_6+Pt_{10}$ | $Co_{79.0}Zr_{3.6}+Pt_{17.4}$ | 730 | 300 | 400 | 12.0 | | 12.7 | 0.23 |

EP 0 330 116 B1

# FIG. 4B

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{92}Zr_8 + Pt_{10}$ | $Co_{78.4}Zr_{4.9}Pt_{16.7}$ | 610 | 650 | 450 | 11.8 | | 12.4 | 0.17 |
| $Co_{90}Zr_{10} + Pt_{10}$ | $Co_{76.1}Zr_{5.9}Pt_{18.0}$ | 595 | 100 | 0 | – | | 11.8 | 0.08 |
| $Co_{99}Zr_1 + Pt_{15}$ | $Co_{77.3}Zr_{0.7}Pt_{22.0}$ | 570 | 750 | 550 | 10.5 | 15.5 | 15.7 | 1.30 |
| $Co_{98}Zr_2 + Pt_{15}$ | $Co_{77.2}Zr_{1.5}Pt_{21.3}$ | 620 | 1000 | 1250 | 10.5 | 16.0 | 13.5 | 1.35 |
| $Co_{96}Zr_4 + Pt_{15}$ | $Co_{76.6}Zr_{2.7}Pt_{20.7}$ | 490 | 700 | 500 | 10.3 | 17.0 | 12.7 | 0.25 |
| $Co_{94}Zr_6 + Pt_{15}$ | $Co_{75.9}Zr_{3.1}Pt_{21.0}$ | 485 | 850 | 550 | 10.5 | 16.5 | 11.8 | 0.22 |
| $Co_{98}Cr_2 + Pt_8$ | $Co_{86.5}Cr_{1.6}Pt_{11.9}$ | 615 | 500 | 400 | 14.6 | | 16.5 | 0.08 |
| $Co_{96}Cr_4 + Pt_8$ | $Co_{84.9}Cr_{3.2}Pt_{11.9}$ | 660 | 500 | 600 | 13.5 | | 15.3 | 0.14 |
| $Co_{94}Cr_6 + Pt_8$ | $Co_{83.0}Cr_{4.6}Pt_{12.4}$ | 670 | 800 | 550 | 11.8 | | 12.7 | 0.17 |
| $Co_{92}Cr_8 + Pt_8$ | $Co_{81.9}Cr_{6.8}Pt_{11.3}$ | 785 | 900 | 650 | 11.6 | | 10.3 | 0.16 |
| $Co_{90}Cr_{10} + Pt_8$ | $Co_{79.0}Cr_{9.0}Pt_{12.0}$ | 700 | 1000 | 500 | 8.5 | | 9.9 | 0.25 |
| $Co_{98}Cr_2 + Pt_{15}$ | $Co_{78.7}Cr_{1.5}Pt_{19.8}$ | 500 | 1250 | 650 | 10.7 | 13.5 | 12.9 | 1.21 |

EP 0 330 116 B1

# FIG. 4C

| Target (alloy target composition atoms) and Pt chip surface occupying area ratio | Thin film composition (atomic percents) | Film Thickness (nm) | $Hc^{\perp}$ (Oe) | Hc" (Oe) | $Hk^{\perp}$ (kOe) | Hk" (kOe) | $4\pi Ms$ (kG) | $Mr^{\perp}/Mr"$ |
|---|---|---|---|---|---|---|---|---|
| $Co_{96}Cr_4+Pt_{15}$ | $Co_{76.8}Cr_{3.5}Pt_{19.7}$ | 550 | 1100 | 850 | 11.0 | 3.5 | 11.7 | 0.09 |
| $Co_{98}V_2+Pt_8$ | $Co_{85.7}V_{1.6}Pt_{12.7}$ | 785 | 550 | 450 | 13.2 | | 15.5 | 0.17 |
| $Co_{96}V_4+Pt_8$ | $Co_{84.0}V_{3.3}Pt_{12.7}$ | 860 | 400 | 500 | 12.5 | | 13.2 | 0.31 |
| $Co_{94}V_6+Pt_8$ | $Co_{82.4}V_{4.9}Pt_{12.7}$ | 790 | 550 | 700 | 11.0 | | 12.2 | 0.21 |
| $Co_{92}V_8+Pt_8$ | $Co_{80.6}V_{6.4}Pt_{13.0}$ | 730 | 650 | 550 | 11.0 | | 11.5 | 0.28 |
| $Co_{90}V_{10}+Pt_8$ | $Co_{79.3}V_{8.4}Pt_{12.3}$ | 710 | 550 | 550 | 11.0 | | 11.2 | 0.17 |
| $Co_{98}V_2+Pt_{15}$ | $Co_{78.3}V_{1.6}Pt_{20.1}$ | 510 | 1500 | 750 | 10.5 | 17.0 | 12.9 | 1.35 |
| $Co_{96}V_4+Pt_{15}$ | $Co_{75.8}V_{3.5}Pt_{20.7}$ | 600 | 1650 | 850 | 10.5 | 16.0 | 12.7 | 1.42 |
| $Co_{94}V_6+Pt_{15}$ | $Co_{74.1}V_{4.8}Pt_{21.1}$ | 565 | 1200 | 900 | 11.0 | 8.5 | 11.8 | 1.17 |
| $Co_{92}V_8+Pt_{15}$ | $Co_{72.1}V_{6.7}Pt_{21.2}$ | 470 | 1500 | 1100 | 10.0 | 2.5 | 10.6 | 0.08 |
| $Co_{98}Nb_2+Pt_8$ | $Co_{86.5}Nb_{1.1}+Pt_{12.4}$ | 810 | 550 | 750 | 11.5 | | 14.8 | 0.27 |
| $Co_{96}Nb_4+Pt_8$ | $Co_{85.3}Nb_{2.3}+Pt_{12.4}$ | 900 | 300 | 550 | 12.0 | | 14.1 | 0.40 |

## FIG. 4D

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{94}Nb_6+Pt_8$ | $Co_{84.2}Nb_{3.4}+Pt_{12.4}$ | 765 | 300 | 500 | 11.7 | | 12.9 | 0.31 |
| $Co_{92}Nb_8+Pt_8$ | $Co_{82.7}Nb_{4.6}+Pt_{12.7}$ | 570 | 700 | 650 | 12.5 | | 12.8 | 0.14 |
| $Co_{90}Nb_{10}+Pt_8$ | $Co_{82.3}Nb_{5.6}+Pt_{12.1}$ | 490 | 650 | 650 | 12.2 | | 11.9 | 0.13 |
| $Co_{98}Nb_2+Pt_{15}$ | $Co_{78.1}Nb_{1.3}+Pt_{20.6}$ | 585 | 1750 | 650 | 10.8 | 16.5 | 13.2 | 1.27 |
| $Co_{96}Nb_4+Pt_{15}$ | $Co_{76.5}Nb_{3.1}+Pt_{20.4}$ | 660 | 1600 | 850 | 10.5 | 16.0 | 12.9 | 1.28 |
| $Co_{94}Nb_6+Pt_{15}$ | $Co_{75.3}Nb_{4.0}+Pt_{20.7}$ | 590 | 1200 | 800 | 9.5 | 15.0 | 11.7 | 1.19 |
| $Co_{92}Nb_8+Pt_{15}$ | $Co_{74.2}Nb_{4.7}+Pt_{21.1}$ | 510 | 1100 | 1200 | 10.0 | 7.5 | 10.7 | 0.13 |
| $Co_{98}Mo_2+Pt_8$ | $Co_{86.9}Mo_{1.4}Pt_{11.7}$ | 600 | 1000 | 500 | 13.5 | 17.5 | 16.9 | 0.14 |
| $Co_{96}Mo_4+Pt_8$ | $Co_{85.5}Mo_{2.8}Pt_{11.7}$ | 650 | 900 | 500 | 12.8 | | 14.5 | 0.13 |
| $Co_{94}Mo_6+Pt_8$ | $Co_{84.1}Mo_{4.2}Pt_{11.7}$ | 665 | 750 | 500 | 11.5 | | 13.6 | 0.17 |
| $Co_{92}Mo_8+Pt_8$ | $Co_{82.9}Mo_{5.6}Pt_{11.5}$ | 550 | 500 | 500 | 10.5 | | 12.4 | 0.16 |
| $Co_{90}Mo_{10}+Pt_8$ | $Co_{81.0}Mo_{7.1}Pt_{11.9}$ | 580 | 250 | 400 | 10.0 | | 12.1 | 0.26 |

EP 0 330 116 B1

## FIG. 4E

| Target (alloy target composition atoms) and Pt chip surface occupying area ratio | Thin film composition (atomic percents) | Film Thickness (nm) | $Hc^{\perp}$ (Oe) | $Hc''$ (Oe) | $Hk^{\perp}$ (kOe) | $Hk''$ (kOe) | $4\pi Ms$ (kG) | $Mr^{\perp}/Mr''$ |
|---|---|---|---|---|---|---|---|---|
| $Co_{98}Mo_2+Pt_{15}$ | $Co_{78.7}Mo_{1.3}Pt_{20.0}$ | 475 | 1500 | 750 | 10.7 | 16.5 | 12.7 | 1.29 |
| $Co_{96}Mo_4+Pt_{15}$ | $Co_{76.2}Mo_{2.7}Pt_{21.1}$ | 650 | 1300 | 950 | 10.7 | 15.0 | 12.3 | 1.31 |
| $Co_{94}Mo_6+Pt_{15}$ | $Co_{74.9}Mo_{4.3}Pt_{20.8}$ | 520 | 850 | 750 | 11.0 | 4.5 | 11.8 | 0.10 |
| $Co_{98}Ta_2+Pt_5$ | $Co_{92.4}Ta_{1.4}Pt_{6.2}$ | 975 | 500 | 550 | 12.8 | | 15.0 | 0.19 |
| $Co_{96}Ta_4+Pt_5$ | $Co_{91.0}Ta_{2.8}Pt_{6.2}$ | 1050 | 500 | 500 | 13.8 | | 14.8 | 0.18 |
| $Co_{94}Ta_6+Pt_5$ | $Co_{89.6}Ta_{4.2}Pt_{6.2}$ | 820 | 450 | 300 | 12.5 | | 13.2 | 0.18 |
| $Co_{92}Ta_8+Pt_5$ | $Co_{88.3}Ta_{5.7}Pt_{6.0}$ | 785 | 400 | 250 | 12.8 | | 11.9 | 0.07 |
| $Co_{90}Ta_{10}+Pt_5$ | $Co_{86.8}Ta_{6.9}Pt_{6.3}$ | 680 | 700 | 250 | 12.0 | | 12.0 | 0.10 |
| $Co_{98}Ta_2+Pt_{15}$ | $Co_{79.4}Ta_{1.3}Pt_{19.3}$ | 675 | 1800 | 250 | 10.5 | 15.5 | 13.7 | 1.29 |
| $Co_{96}Ta_4+Pt_{15}$ | $Co_{76.8}Ta_{3.1}Pt_{20.1}$ | 750 | 2100 | 1100 | 10.5 | 16.0 | 13.1 | 1.35 |
| $Co_{94}Ta_6+Pt_{15}$ | $Co_{74.7}Ta_{4.1}Pt_{21.2}$ | 520 | 1500 | 1500 | 11.5 | 4.5 | 12.2 | 0.19 |
| $Co_{98}W_2+Pt_5$ | $Co_{92.3}W_{1.4}Pt_{6.3}$ | 910 | 450 | 750 | 11.0 | | 15.6 | 0.27 |

EP 0 330 116 B1

# FIG. 4F

EP 0 330 116 B1

| Target (alloy target composition atoms) and Pt chip surface occupying area ratio | Thin film composition (atomic percents) | Film Thickness (nm) | $Hc^{\perp}$ (Oe) | Hc" (Oe) | $Hk^{\perp}$ (kOe) | Hk" (kOe) | $4\pi Ms$ (kG) | $Mr^{\perp}/Mr$" |
|---|---|---|---|---|---|---|---|---|
| $Co_{96}W_4 + Pt_5$ | $Co_{91.0}W_{2.7}Pt_{6.3}$ | 805 | 400 | 650 | 10.8 | | 14.7 | 0.32 |
| $Co_{94}W_6 + Pt_5$ | $Co_{89.6}W_{4.1}Pt_{6.3}$ | 780 | 550 | 400 | 13.8 | | 13.7 | 0.09 |
| $Co_{92}W_8 + Pt_5$ | $Co_{88.8}W_{5.5}Pt_{5.7}$ | 815 | 900 | 400 | 11.8 | | 12.8 | 0.19 |
| $Co_{90}W_{10} + Pt_5$ | $Co_{86.5}W_{6.7}Pt_{6.8}$ | 910 | 700 | 500 | 10.8 | | 11.8 | 0.16 |
| $Co_{98}W_2 + Pt_{15}$ | $Co_{79.0}W_{1.3}Pt_{19.7}$ | 480 | 1800 | 700 | 10.5 | 17.5 | 13.8 | 1.33 |
| $Co_{96}W_4 + Pt_{15}$ | $Co_{76.9}W_{2.8}Pt_{20.3}$ | 615 | 1600 | 850 | 10.5 | 16.5 | 13.3 | 1.33 |
| $Co_{94}W_6 + Pt_{15}$ | $Co_{76.0}W_{4.3}Pt_{19.7}$ | 710 | 1200 | 900 | 11.5 | 4.5 | 12.9 | 0.17 |

## FIG. 6

# FIG. 7

# FIG. 8

# FIG. 9

# FIG. 10

*FIG. 11*

*FIG. 12*

FIG. 13

B(kG)

H(kOe)

FIG. 14

B

H(kOe)

30

# FIG. 15

# FIG. 16

# FIG. 17

# FIG. 18

# F I G. 19